# EUROPÄISCHE PATENTSCHRIFT

(11) **EP 1 564 407 B1**
(45) Veröffentlichungstag und Bekanntmachung des Hinweises auf die Patenterteilung: **18.04.2012**
(21) Anmeldenummer: 05003259.8
(22) Anmeldetag: 16.02.2005
(51) Int. Cl.: F03G 7/06

(54) **Motor**
Motor
Moteur

(30) Priorität: 17.02.2004 DE 102004007605; 22.09.2004 DE 102004045892
(43) Veröffentlichungstag der Anmeldung: 17.08.2005
(73) Patentinhaber: Seidler, Waldemar, 92724 Trabitz/Weiden (DE)
(72) Erfinder: Seidler, Waldemar, 92724 Trabitz/Weiden (DE)
(74) Vertreter: Graf Glück Habersack Kritzenberger

(56) Entgegenhaltungen:
- DE-A1- 3 331 933
- DE-A1- 19 822 847
- DE-A1- 19 957 425
- US-A- 5 961 296

## Beschreibung

Die Erfindung betrifft eine Anordnung nach dem Oberbegriff des Anspruches 1 bzw. ein Verfahren nach dem Oberbegriff des Anspruches 13 bzw. 14.

Aus der DE 82 20 033 U1 ist eine Wärmekraftmaschine bekannt, bei der eine Vielzahl einseitig an einem Rahmen befestigter dehnfähiger Behälter mit Zahnstangen eine gemeinsame Welle antreiben. Durch eine derartige Konstruktion ergibt sich eine Addition der von den Behältern auf die Welle ausgeübten Kräfte.

Gegenstand der DE 198 22 847 A1 betrifft maschinelle Einrichtungen, die die Dehnung von Fasern ausnutzen, wobei mit einem Streifen von 5 m in einem Gehäuse mit 25 Umlenkrollen eine Ausdehnung von 200 mm erreicht werden kann.

Ferner ist aus der DE 199 57 425 A1 (mit dem nächsten Stand der Technik) ist ein Energiewandler und ein Verfahren zur Nutzung niederpotentieller Energieträger bekannt, mittels dem sowohl elektrische als auch mechanische Energie aus thermischer Energie gewonnen wird. Der Energiewandler weist hierzu einen Wärmetauscher und eine dampfbetriebene Entspannungseinrichtung auf.

Desweiteren ist aus der US 4 055 954 eine Vorrichtung bekannt, bei der ein einziger, an einem Rahmen befestigter dehnfähiger Behälter bei seiner Ausdehnung einen Hebel bewegt.

Aufgabe der Erfindung ist, eine Anordnung vorzuschlagen, bei der durch Erhitzen einer Mehrzahl von Körpern aufgrund der Wärmeausdehnung des Materials eine Längung der Körper erreicht wird, die zum Verrichten einer Arbeit, z.B. eines Hubes und zur Gewinnung von Energie ausgebildet ist. Desweiteren soll mit der Erfindung eine Einrichtung und ein zugehöriges Verfahren vorgeschlagen werden, mit deren Hilfe ein Misch- und Wärmeaustauschvorgang in Verbindung mit der Energiegewinnung durch Wärmeausdehnung erzielt wird.

Gemäß der Erfindung wird dies mit den Merkmalen des Kennzeichens des Anspruches 1 bzw. der Ansprüche 13-14 erreicht. Weitere Ausgestaltungen der Erfindung sind Gegenstand der Unteransprüche.

Das Prinzip der Erfindung besteht darin, dass in einem Rahmensystem mindestens ein durch Beheizen in der Länge ausdehnbarer Körper vorzugsweise eine Mehrzahl von Ausdehnungskörpern aus Metall vorgesehen sind, die wahlweise parallel oder hintereinander bzw. in Kaskade geschaltet sind, wobei im Falle der Hintereinander-schaltung der Anfang des ersten Körpers fest mit einem starren Rahmen verbunden ist, derart, dass das entgegengesetzte Ende des ersten Körpers aufgrund der Aufheizung um einen Betrag X aufgrund der Wärmeausdehnung gelängt wird, dass diese Längung auf den nächstfolgenden Körper übertragen und der Längung hinzuaddiert wird, die aufgrund der Aufheizung des zweiten Körpers erzielt wird usw., so dass bei einer Anzahl von n-Körpern am Ende des nten Körpers der n-fache Wert einer einzelnen Längung abgenommen werden kann, also n mal X. Um die Wärmeausdehnung der einzelnen beheizten Ausdehnungskörper, z.B. Hohlrohre in vollem Umfang ausnutzen und am Ende addieren zu können, sind jeweils zwei benachbart angeordnete Körper 1 und 2 über eine Wippenanordnung mit dem Rahmen fest, untereinander jedoch gelenkig verbunden, ebenso wie das Ende des zweiten Körpers mit dem Ende des dritten Körpers und der Anfang des dritten Körpers mit dem Anfang des vierten Körpers, usw..

Während der Eingang als feste Verbindung zwischen Rahmen und erstem Körper ausgebildet ist, ist der Ausgang des letzten Körpers mit einer Arbeitsvorrichtung, z.B. einer Hubvorrichtung, einer Presse oder dergl. verbunden, die die durch die Ausdehnung der Körper erzielten Weg mal Kraft in an der Arbeitsvorrichtung ausgeübte Arbeit umwandelt.

Der Rahmen ist vorzugsweise so ausgebildet, dass er abschnittweise aufgebaut ist. Das obere un das untere horizontale Querteil des Rechteckrahmens werden jeweils durch eine Spannvorrichtung mit den beiden vertikalen U-förmigen Rahmenteilen fest verspannt, so dass der Rahmen in gespanntem Zustand weitestgehend starr ist. Zumindest im oberen und im unteren Bereich ist der Rahmen gegenüber den Ausdehnungskörpern durch eine thermische Isolierung gegen Entweichen von Wärme abgedichtet, damit der Verbrauch an Aufheizenergie für die einzelnen Körper so gering wie möglich gehalten wird. Der Rahmen kann so ausgelegt sein, dass er ebenfalls beheizt ist, so dass er in beheiztem Zustand und gleichzeitig abgekühlten Ausdehnungskörpern eine Längung erfährt, die zusätzlich zu der Längung der beim Beheizen der Ausdehnungskörper erzielten Ausdehnung für die Energiegewinnung genutzt werden kann. Hierbei ist der Rahmen auch auf der Außenseite isoliert.

Die Anordnung nach der Erfindung besteht aus einer Mehrzahl von voneinander getrennten Einheiten, deren jede eine Mehrzahl von Hohlrohren aufweist. Die einzelnen Einheiten sind voneinander getrennt, so dass die Einheiten jeweils paarweise untereinander beheizt werden bzw. unbeheizt bleiben, d.h., dass eine Einheit beheizt wird, während die andere Einheit des gleichen Paares unbeheizt bleibt. Die Zwischenräume zwischen den Rohren und den Rahmenteilen jeder Einheit sind vorzugsweise mit Wasser gefüllt, so dass die für die Beheizung der Rohre verwendete Heizenergie aus einem Heizungssystem in Form einer Heizanlage eines Gebäudes zusätzlich entnommen werden kann.

In weiterer Ausgestaltung der Erfindung wird vorgeschlagen, die Aufheizung der parallel oder in Kaskade geschalteten Ausdehnungskörper von einem Beheizungs-system aus vorzunehmen, das z.B. in einem Gebäude als Heizanlage vorhanden ist und von dem die Heizenergie für die erfindungsgemäße Anordnung abgezweigt wird, das aber auch eine elektrische oder eine beliebige andere hierfür geeignete Wärmequelle bzw. Aufheizvorrichtung sein kann. Für einen kontinuierlichen Dauerbetrieb werden jeweils Paare von Einheiten der erfindungsgemäßen Anordnung verwendet, wobei eine Einheit erhitzt wird, während die andere abkühlt. Die Beheizung der Hohlkörper bzw. Hohlrohre innerhalb jeder Einheit wird vorzugsweise über Heißwasser aus einer herkömmlichen Heizanlage entnommen, diese Aufheizung der Hohlkörper kann jedoch auch über Heißluft oder auf elektrischem Wege, ggf. in Verbindung mit einer Heißwasser-Beheizung vorgenommen werden. Da der starre Rahmen aus Metall, z.B. Eisen oder Stahl besteht, und sowohl innen als auch außen isoliert ist, kann die Längung des Rahmens auch durch Erhitzen genutzt werden, um eine solche Längung des Längsrahmenteiles der Längenänderung der Ausdehnungskörper hinzu zu addieren.

Zur Optimierung der Wärmenutzung wird nach der Erfindung eine Misch- und Wärmeaustauscheinrichtung vorgeschlagen, mit der die bei einer Abkühlung der Ausdehnungseinheiten auftretende Wärmeenergie zur anderweitigen Nutzung, z.B. zur Raumerwärmung gewonnen werden kann. Bei der Aufheizung einer Ausdehnungs-einheit für die Energiegewinnung tritt eine Periode der Abkühlung auf, während der die anfallende Wärme in der Regel ungenutzt bleibt und damit verloren geht. Mischt man diese Wärme durch stufenweises Mischen und Wärmetauschen mit einer anderen oder vielen anderen Ausdehnungseinheiten und nutzt man das Temperaturgefälle zwischen den einzelnen Ausdehnungseinheiten, indem man einen Temperaturaus-gleich zwischen beiden herbeiführt, lässt sich die beim Abkühlen der Ausdehnungs-einheiten frei werdende Wärme z.B. in einem strömenden Medium, wie Luft, Wasser, Öl, etc. nutzen, während parallel dazu durch Aufheizen und durch Abkühlen der Ausdehnungseinheiten und durch Ausnutzen der Längungen und Kürzungen der Ausdehnungskörper Arbeit geleistet wird, die in Energie umgewandelt wird.

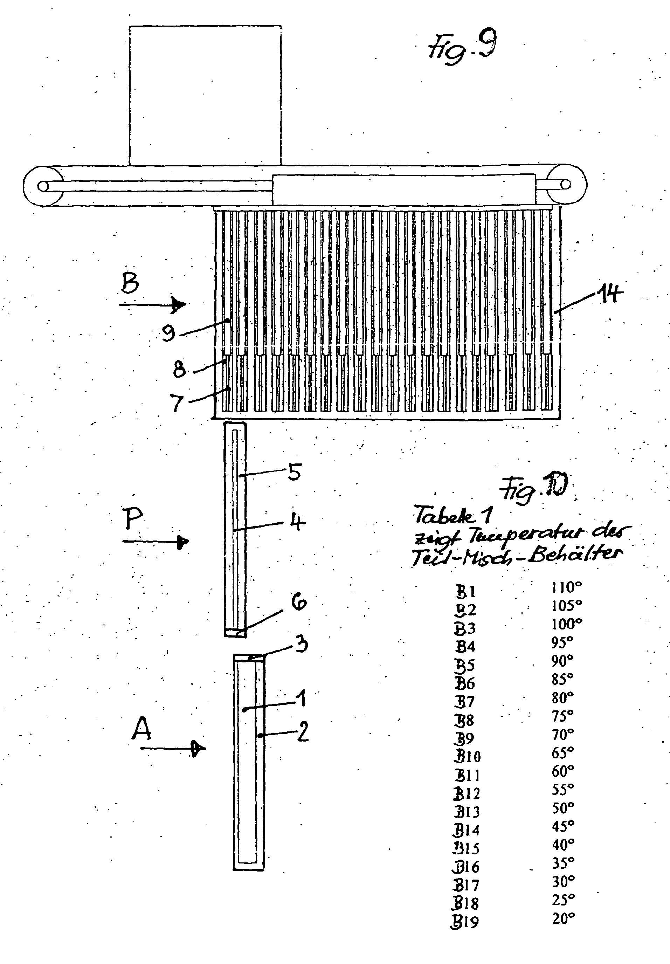

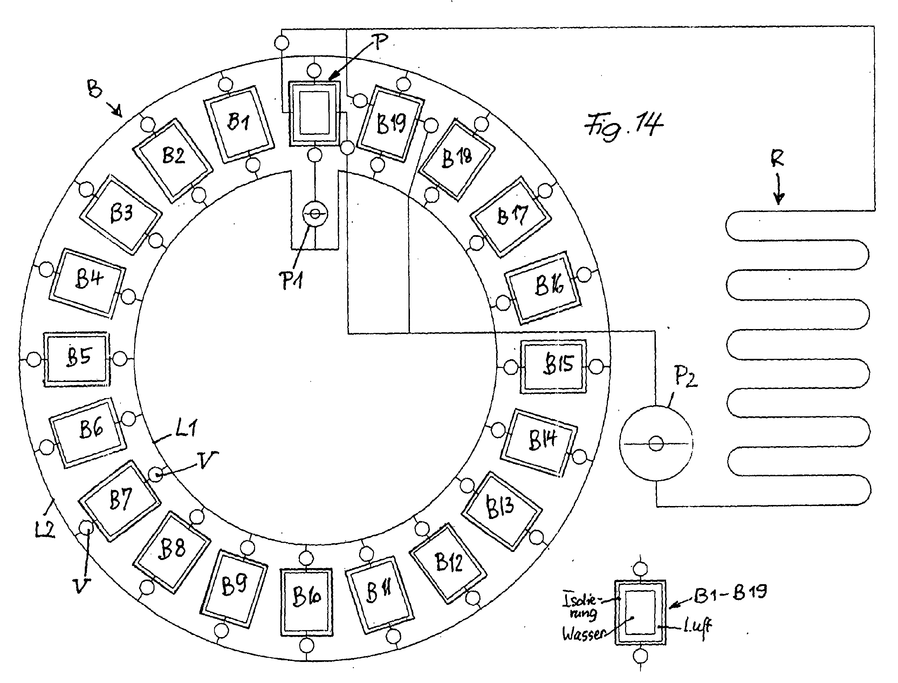

Nach einem weiteren Aspekt der Erfindung wird vorgeschlagen, die aufeinanderfolgenden Phasen des Aufheizens und Abkühlens des Ausdehnungssystems in einer Misch- und Wärmetausch-Anordnung ablaufen zu lassen. Dadurch werden die Arbeitshübe aufgrund der Ausdehnung der Ausdehnungskörper bei deren Erwärmung und des Zusammenziehens der Ausdehnungskörper bei deren Abkühlung in Teilschritte unterteilt, die in Verbindung mit in gleichmäßigen Temperaturstufen abnehmenden und zunehmenden Schritten der Misch- und Wärmetauschvorrichtung durchgeführt werden (Fig. 9). Die Vielzahl von übereinander oder in Kreisform (Fig. 14) angeordneten Wärmetausch-Vorrichtungen werden dabei in gleichmäßigen Temperaturstufen zunehmenden bzw. abnehmenden, vorgegebenen und thermostat gesteuerten Temperaturwerte erwärmt und nacheinander in Wärmeaustausch mit der erhitzten Ausdehnungsvorrichtung gebracht, derart, dass in abnehmender Temperaturfolge die Teilbehälter bzw. deren in den Teilbehältern isoliert angeordneten Wärmetauscher durch Wärmeübertragung einen schrittweisen Temperaturausgleich entsprechend den in den Tabellen der Zeichnung angegebenen Werten bewirken, derart, dass bei Erreichen des untersten Temperaturwertes eine Erwärmung des unteren Teilbehälters auf den unteren Anfangswert erreicht wird, dass der Wärmeaustausch der Temperatur der Teilbehälter mit dem Ausdehnungskörper in aufsteigender Reihenfolge durchgeführt wird, indem die Temperatur des jeweiligen unteren Temperaturwertes mit der Ausdehnungseinheit erzielt wird, dass bei Erreichen des oberen Temperaturwertes eine Aufheizung auf den obersten Temperaturwert in der Tabelle erzielt wird, und dass dann der Zyklus wiederholt weitergeführt wird.

Dabei tritt bei abnehmenden Temperaturen in den Teilbehältern ein Wärmeaustausch von der Ausdehnungseinheit höherer Temperatur im Vergleich zu dem jeweiligen Teilbehälter ein, indem die Teilbehälter nacheinander oberhalb der Ausdehnungseinheit mit dieser in Kontakt gebracht werden und bei steigender Temperatur in den Teilbehältern ein Wärmeaustausch von dem jeweiligen Teilbehälter höherer Temperatur auf die Ausdehnungseinheit stattfindet, indem die jeweiligen Teilbehälter nacheinander unterhalb der Ausdehnungseinheit mit dieser in Kontakt gebracht werden. Die Misch- bzw. Wärmetausch-Anlage arbeitet mit der von außen auf die erforderliche Temperatur beheizten Ausdehnungseinheit im Wärmeaustausch mit den aufgeheizten Teilbehältern durch Kontakt zwischen den wärmeübertragenden Ausdehnungseinheiten oder durch Beheizung auf elektrischem Wege oder durch Beheizen mit einem Fluid.

Eine Alternative hierzu ist z.B. in Fig. 14 dargestellt, bei der die Ausdehnungseinheit mit einzelnen Teilbehältern in Kreisform geschaltet ist, die über Ventile und Leitungen nacheinander an die Ausdehnungseinheit über Pumpe für den Wärmeaustausch anschließbar sind.

Nachstehend wird die Erfindung in Verbindung mit der Zeichnung anhand eines Ausführungsbeispieles erläutert. Es zeigt:
- Fig. 1: eine schematische Darstellung einer Ausführungsform der erfindungsgemäßen Anordnung zum Erzeugen von Energie in seitlicher Ansicht,
- Fig. 2: eine Schnittansicht längs der Linie I - I der Fig. 1,
- Fig. 3: ein Paar von im Gegentakt arbeitenden Einheiten, die mit einer bestehenden Heißwasseranlage kombiniert sind bzw. von dieser Anlage aus beheizt werden,
- Fig. 4: eine weitere Ausführungsform der Erfindung in Abänderung der Darstellung nach Fig. 1 mit einer kombinierten Gebläse- und Warmwasser-Beheizung,
- Fig. 5: eine Darstellung der Anordnung nach Fig. 4 in einer um 90° gedrehten Ansicht,
- Fig. 6: eine Parallelschaltung der Ausdehnungskörper,
- Fig. 7: eine Gesamtansicht einer Energieerzeugungsanlage,
- Fig. 8: eine Ausführungsform einer Misch- und Wärmeaustauschvorrichtung,
- Fig. 9: eine Darstellung einer weiteren Ausführung einer Misch- und Wärmeaustauschanordnung nach der Erfindung für eine Anordnung nach Fig. 1,
- Fig. 10: eine Tabelle 1 der Temperaturen, auf die die Teilmischbehälter vorerwärmt werden,
- Fig. 11: eine Tabelle 2 mit der Temperatur der Ausdehnungseinheit P und der Teilmischbehälter B1 - B19,
- Fig. 12: eine der Tabelle 2 entsprechende Tabelle 3 mit stufenweise ansteigenden Temperaturen,
- Fig. 13: eine Gesamttabelle 4, die die Tabellen 2 und 3 miteinander kombiniert, und
- Fig. 14: eine abgeänderte Ausführungsform einer Anordnung nach Fig. 9.

Eine Grundeinheit I der erfindungsgemäßen Anordnung besteht aus einem massivem Rechteckrahmen 1 mit einem U-förmigen Rahmenteil 2, dessen freie Schenkel 3, 4 am oberen und am unteren Ende jeweils einen Querbalken 5, 5' aufweisen, durch den der Rahmen 1 geschlossen wird. Die Verbindung der Enden des Balkens 5 mit den freien Enden der Schenkel 3, 4 erfolgt über lösbare Buchsen 6, 6' mit Spannvorrichtungen 7, 7' und Schraubbolzen 8, 8' sowie Isolierung 9, 9' zwischen den Querbalken 5, 5' und den Schenkeln 3, 4. Der Rahmen 1 mit Querbalken 5, 5' ist durch eine Isolierung 10, 10' thermisch isoliert, die verhindert, dass Wärme aufgrund der Beheizung der Ausdehnungskörper 12 an die Querbalken 5, 5' übertragen wird. Die Querbalken 5, 5' können ebenfalls als Ausdehnungskörper ausgebildet sein und sind gegen Wärmeverlust isoliert. Zusätzlich ist der gesamte Rechteckrahmen außen durch eine isolierende Ummantelung, die schematisch mit M bezeichnet ist, gegen Wärmeverlust aus dem Inneren geschützt. Im Rahmeninneren 11 sind die Ausdehnungskörper 12, 13, 14, 15 parallel zueinander bzw. übereinander angeordnet dargestellt, die als Hohlrohre oder als Vollkörper aus Eisen, Stahl oder entsprechendem Material bestehen, ausgebildet sein können. Die vordere Stirnseite 16 des Hohlrohres 12 ist bei 17 über eine starre Verbindung 18 bei 19 mit dem Rahmenteil 2 fest verbunden. Die hintere Stirnseite 20 weist eine mittige Befestigungsstelle 21 auf, an der ein Verbindungsarm 22 über eine Gelenkstelle 23 mit einem Hebelarm 24 verbunden ist, der bei 25 mittig gelagert ist. Die Lagerstelle 25 ist bei 26 starr mit dem Rahmenteil 3 verbunden, und das entgegengesetzte Ende des Hebelarmes 24 besitzt eine Gelenkstelle 27, an der ein Verbindungsarm 28 angelenkt ist, dessen anderer Endpunkt bei 29 mit der hinteren Stirnseite 30 des benachbarten Ausdehnungskörpers 13 starr befestigt ist. Die Vorrichtung 20 - 30 stellt somit eine Mehrfach- Wippenanordnung dar, deren Schwenklager starr mit dem Rahmen 1 und deren beide Anlenkstellen 21 und 30 mit zwei benachbarten Ausdehnungskörpern 12, 13 verbunden sind. Damit die Ausdehnungskörper während des Aufheizvorganges ihre parallele Position zueinander beibehalten, sind Vorkehrungen für eine geradlinige Zwangsführung getroffen, z.B. Rollenführungen oder Gleitführungen R zwischen den jeweils zwei einander zugewandten, benachbarten Mantelflächen; diese Führungen haben die Funktion von Abstandshaltern.

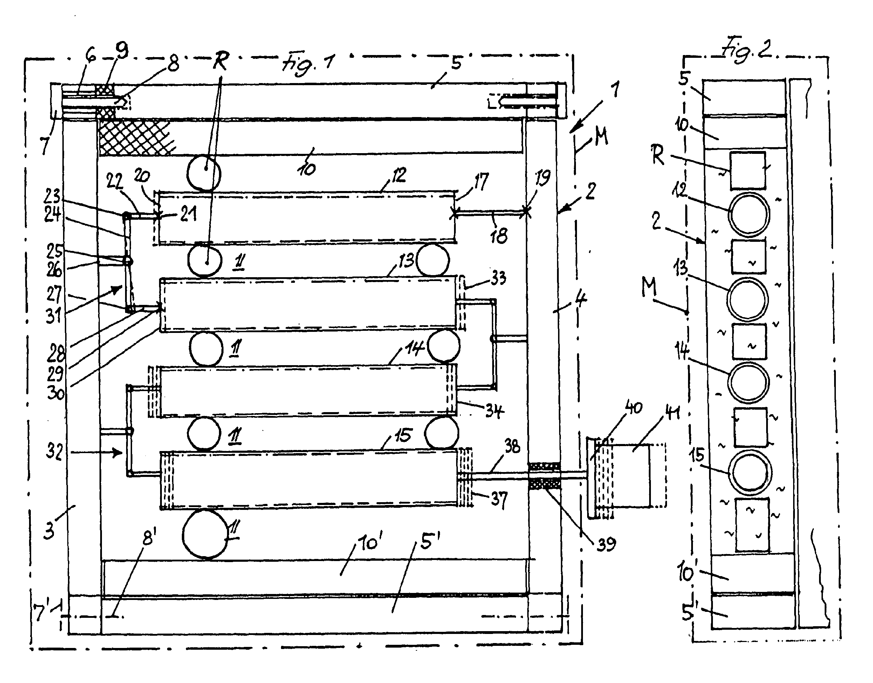

Die Ausdehnungskörper, von denen in Fig. 1 vier, nämlich 12 - 15 dargestellt sind, deren Anzahl in der Praxis jedoch erheblich größer sein kann, sind zueinander in Kaskade geschaltet, so dass die Wippen 31 bzw. 32 jeweils die vorderen Stirnseiten 33 und 34 bzw. die hinteren Stirnseiten 35 und 36 miteinander verbinden. Diese Wippen 31 und 32 sind in entsprechender Weise wie die Wippenanordnung W1 aufgebaut und arbeiten in gleicher Weise. Über sie werden die Ausdehnungshübe der einzelnen Ausdehnungsrohre übertragen, wobei diese Hübe sich addieren.

Die vordere Stirnfläche 37 des letzten Ausdehnungskörpers 15 ist mit einem Arm 38 fest verbunden, der durch das Rahmenteil 2 über eine Abdichtvorrichtung 39 verbunden ist und eine Arbeitsfläche 40 beaufschlagt, z.B. eine Hubvorrichtung 41. Die Gesamtausdehnung der Hubzylinder 12 - 15, die am stirnseitigen Ende 37 des letzten Ausdehnungskörpers 15 erzielt wird, wird als Wegstrecke über den Arm 38 auf die Platte 40 übertragen, so dass die Platte 40 um eine Strecke angehoben wird, die dem n-fachen des Ausdehnungsweges der n Ausdehnungskörper entspricht.

Anstatt die Ausdehnungskörper 12 in Kaskade bzw. in Serie zu schalten, können diese Ausdehnungskörper auch parallel zueinander angeordnet werden, wobei dann die Ausdehnung eines jeden Körpers unabhängig von den anderen abgenommen und genutzt wird.

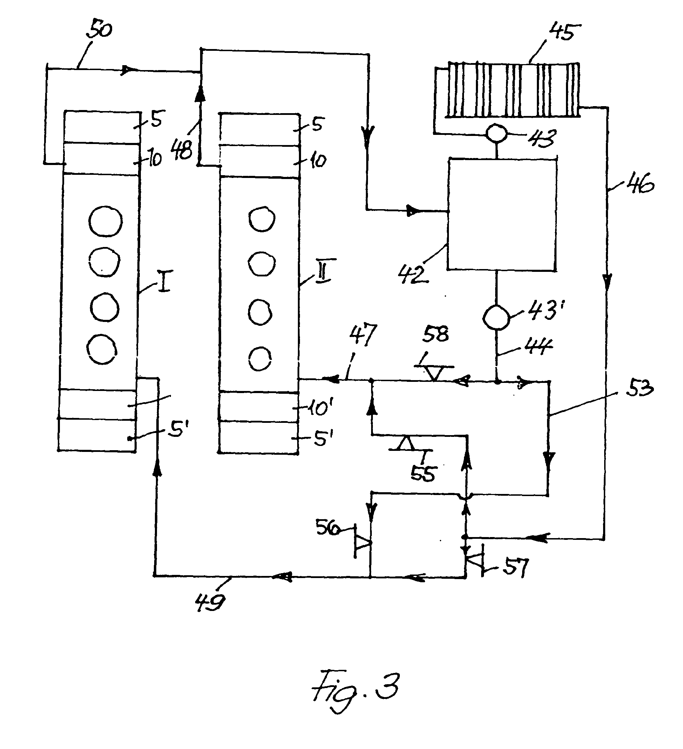

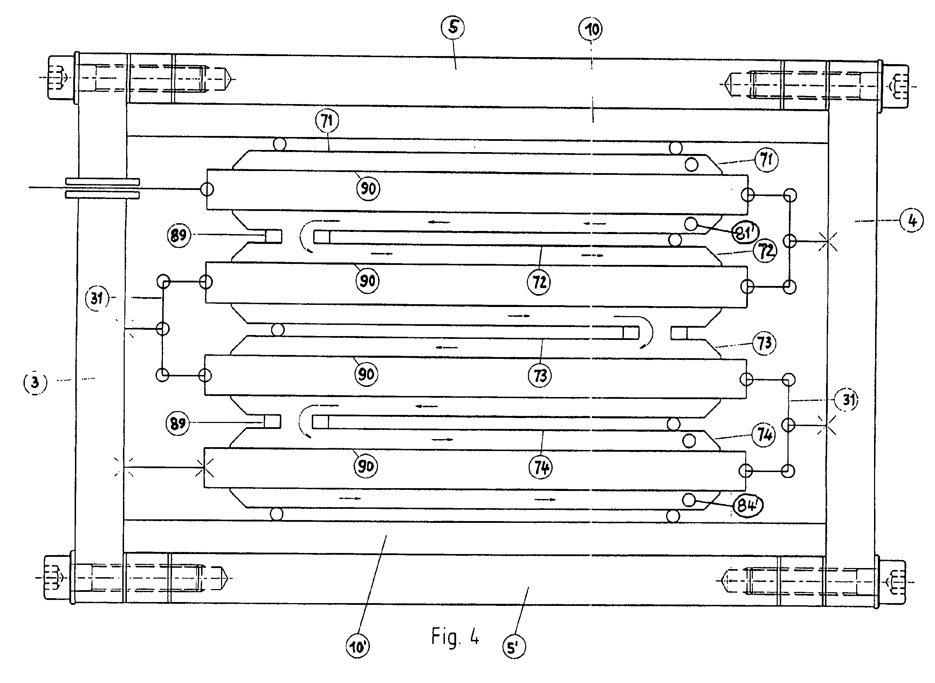

Die Beheizung der Ausdehnungskörper 12 - 15 nach der Darstellung in den Figuren 3 und 4 erfolgt von einem Heizkessel 42 einer Heißwasser-Heizanlage, z.B. eines Wohngebäudes (nicht dargestellt) aus, von der über eine Wasserpumpe 43 in einer Heizleitung 44 Heißwasser, das zur Beheizung von Heizkörpern 45 im Gebäude dient, zur Beheizung der Körper 12 - 15 abgezweigt wird, und das mittels einer weiteren Pumpe 43' in den Kreislauf durch die Körper 12 - 15 mindestens eines Paares von Einheiten I und II in Umlauf gesetzt wird. Vom Heizkessel 42 verläuft eine Leitung 47 zum Eingang in die Einheit II. Das Heißwaser umströmt die Körper 12 - 15 der Einheit II und fließt über eine Leitung 48 wieder zum Heizkessel 42 zurück. Von der Leitung 47 zweigt eine Leitung 49 ab, die an den Eingang der Einheit I geführt ist und den Ausgang der Einheit I über die Rückleitung 50 verlässt, die mit der Rückleitung 48 der Einheit II verbunden ist. Eine Rücklaufleitung 46 ist vom Heizkörper 45 mit der Leitung 51 verbunden, die in die Leitung 47 mündet und über den Zweig 52 Teil der Leitung 59 ist. Des weiteren ist ein Zweig 53 der Leitung 47 mit der Leitung 49 verbunden.

Um die Körper 12 - 15 der Einheiten I und II abwechselnd aufheizen und abkühlen zu können, sind Ventile 55 - 58 in die Durchflussleitungen eingeschaltet, und zwar Ventil 55 in die Leitung 51, Ventil 56 in die Leitung 53, Ventil 57 in die Leitung 52 und Ventil 58 in die Leitung 47. Ein Thermometer 59 mißt die Ausgangstemperatur der Einheiten I und II. Die Betriebsweise zur Aufheizung der Einheit I und zur gleichzeitigen Abkühlung der Einheit II verläuft dabei so, dass Ventil 55 geöffnet, Ventil 56 geschlossen, Ventil 57 geschlossen und Ventil 58 offen ist. Die umgekehrte Ventilposition gilt, wenn Einheit I abgekühlt und Einheit II aufgeheizt werden soll, und zwar im entgegengesetzten Zyklus.

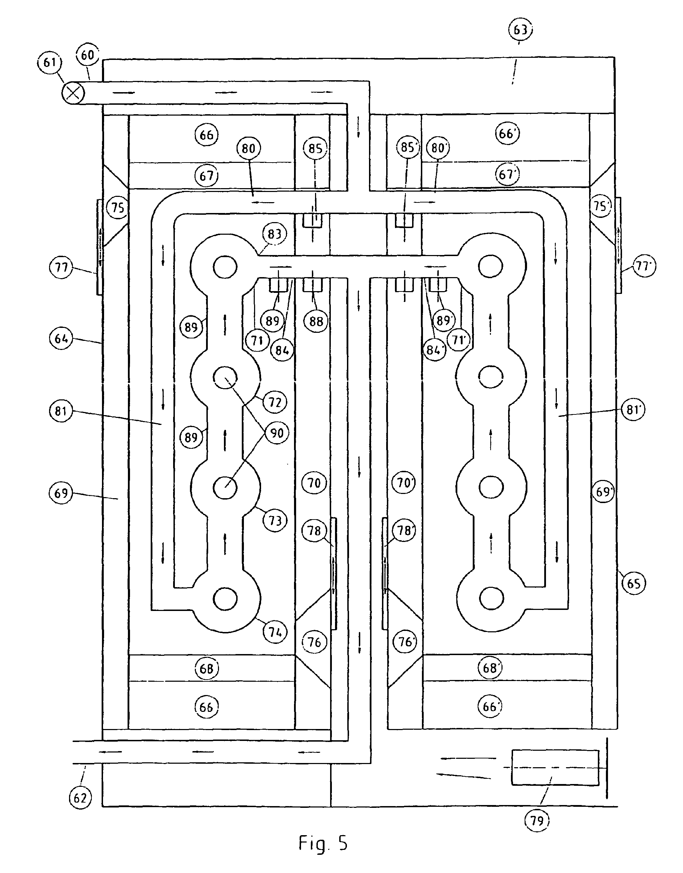

Die Ausführungsform nach den Figuren 4 und 5 stellt eine Weiterentwicklung der Anordnung nach Fig. 3 dar, nämlich die Ausbildung eines Raumheizkörpers, wie er z.B. in Fig. 3 mit 45 angedeutet ist. Dabei entspricht die Heißwasserleitung 60 mit im Zuge dieser Leitung eingeschalteter Wasserpumpe 61 der Leitung 43 in Fig. 3 und die Kaltwasserableitung 62 der Leitung 46 in Fig. 3. Der Heizkörper 63 besteht seinerseits aus zwei Einheiten 64, 65, die ähnlich aufgebaut sind wie die Einheiten I und II der Anordnung nach den Figuren 1 bzw. 3.

Die beiden plattenförmigen Einheiten 64, 65 nach den Figuren 4 und 5 bestehen jeweils aus einem äußeren Rahmen 66, 66' und einer nach oben und nach unten isolierenden Lage 67, 68, 67', 68' sowie stehenden inneren und äußeren Lagen 69, 70, 69', 70' aus Isoliermaterial, einem Innensystem aus parallelen Ausdehnungskörper 71, 72, 73, 74, die von Heißwasser von unten nach oben fließend im Parallelbetrieb und abwechselnd zueinander durchflossen werden, wobei das für die Erwärmung dienende Heißwasser nach dem Durchströmen der Ausdehnungskörper abgekühlt durch die Leitung 62 wieder abgeführt wird. Die isolierenden Innen- und Außenwände 69, 70 weisen Öffnungen 75, 76, 75', 76' auf, die mit Hilfe von Schiebern 77, 78, 77', 78' oder entsprechenden Verschlüssen verschlossen werden. Ein Gebläse 79 dient dazu, die durch das Heißwasser erzeugte Wärme an den Ausdehnungskörpern durch die Öffnungen der die jeweilige Einheit umschließenden Wand nach außen abzuführen und den umgebenden Raum zu erwärmen.

Die beiden Heizkörperrahmen 66, 66' der Einheiten 64, 65 mit ihren Isolierungen 67, 67' sind parallel und symmetrisch zueinander angeordnet und weisen einen Eingang 80, 80' für das Heißwasser-Zuleitungsrohr 81, 81' auf, das in den unteren Ausdehnungskörper 62 mündet. Das Heißwasser durchströmt das System von Ausdehnungskörpern in den beiden Einheiten von unten nach oben und verlässt das oberste Hohlrohr über den Ausgang 83. Die Heißwasser-Ableitrohre 84, 84' münden in das Wasser-Rückführrohr 62, das Wasser wird in den Heizkessel zurückgeführt und für den erneuten Umlauf wieder aufgeheizt.

In den Heißwasser-Zulaufleitungen 80, 80' sind Absperrventile 85, 85', in den Ablaufleitungen 84, 84' Absperrventile 88, 88' angeordnet. Die Verschlussvorrichtungen bzw. Schieberklappen 77, 78 an den Außen- und Innenseiten der Einheiten sind vorgesehen, um entsprechende Warmluftströme zu sperren oder freizugeben, und werden von dem Gebläse in Umlauf gesetzt, um den im Inneren der Heizkörpereinheiten entstehenden Wärmefluss zu steuern.

Die Anordnung nach den Figuren 4 und 5 arbeitet in der Weise, dass zum Aufheizen der Einheit 64 und zum gleichzeitigen Abkühlen der Einheit 65 die Ventile 85 und 88 geöffnet, die Ventile 85' und 88' geschlossen, die Schieber 77'und 78' geöffnet und die Schieber 77, 78 geschlossen werden. Für den umgekehrten Arbeitszyklus, nämlich Aufheizen der Einheit 65 und Abkühlen der Einheit 64 werden die Positionen der Ventile und der Schieber vertauscht. Die Ausdehnungskörper 71 - 74, die durch Aufheizung eine Ausdehnung erfahren, stehen miteinander durch eine flexible , die Ausdehnung aufnehmende Vorrichtung 89, z.B. durch eine flexible Membran, in Verbindung, damit ein störungsfreier Durchfluß von Heißwasser sichergestellt ist. Mit 90 ist in den Figuren 4 und 5 ein geschlossenes Luft-rohr dargestellt, das die Wasserrohre 71 - 74 durchsetzt; die darin enthaltene Luft dient als Puffer für das die Rohre 71 - 74 durchströmende Warmwasser.

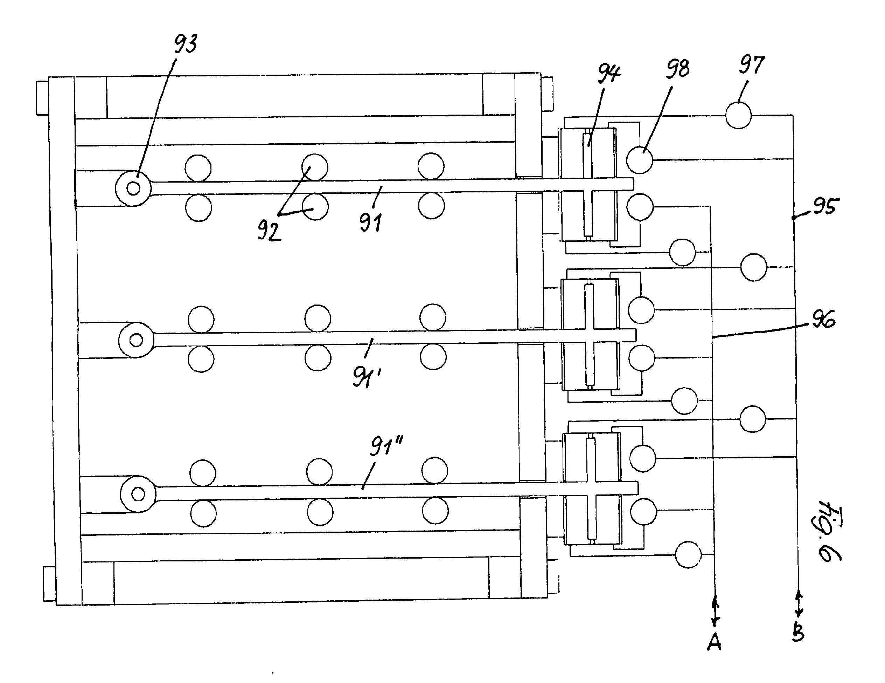

Fig. 6 zeigt eine abgeänderte Ausführungsform der Anordnung nach Fig. 1. Die Ausdehnungskörper 91, 91', 91" in Form von Stangen, Rohren oder dergl. sind parallel zueinander angeordnet und arbeiten im Gegensatz zu der in Fig. 1 dargestellten Kaskadenanordnung in paralleler Betriebsweise. Die Stangen sind in Führungsrollen 92 geführt und am einen Ende am Rahmen bei 93 festgelegt. Das andere Ende ist mit einer Zylinder-Kolbenanordnung 94 verbunden. Die aufgrund der Beheizung der Ausdehnungskörper 91 erzielte Verlängerung und Verkürzung wird hierbei in der Zylinder-Kolbenanordnung 94 z.B. hydraulisch realisiert, wobei jeder Zylinder an den beiden Endstellen des Kolbens mit zwei Leitungssystemen 95, 96 in Verbindung steht und das aus dem Zylinder abgegebene Fluid durch Ventile 97, 98 so gesteuert wird, dass bei A und B der gemeinsame hydraulische Druck aus den Zylindern 94 für die Energiegewinnung genutzt werden kann.

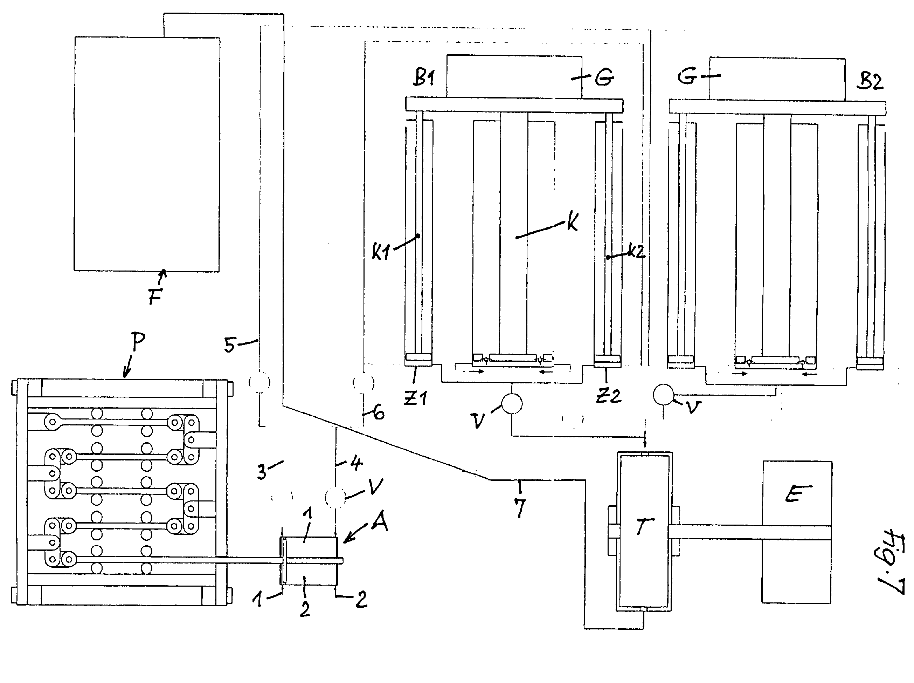

Aus der Energiegewinnungsanlage nach Fig. 7 wird die Längenänderung, die durch Beheizung und Abkühlung der Ausdehnungskörper erzielt wird, entnommen und an einen Umwandler bzw. Druckerzeuger A mit doppelt wirkendem Zylinderkolben und mit vier Anschlüssen übergeben. Der Zylinder ist in zwei axiale Kammern 1 und 2 unterteilt. In die Kammer 2 münden die Leitungen 1, 2, in die Kammer 1 die Leitungen 3, 4. Bei Bewegung der Kolbenstange mit Kolben nach rechts entsteht Druck in der Leitung 4, der über eine Leitung 6 an die Kolben K1, K2 im Zylinder Z1, Z2 des Systems B1 gegeben wird, wodurch Druck auf das Gewicht G ausgeübt und dieses Gewicht angehoben wird. Zur Verhinderung des Rückflusses von Öl sind in die Leitungen 1 - 4 Rückschlagventile eingebaut. Der Raum hinter der Kolbenstange wird mit Öl durch die Leitung 1 aus dem Ausgleichbehälter F gefüllt. Bei Abfkühlung bewegt sich der Kolben nach links und erzeugt Druck in der Leitung 3. Über die Leitung 2 wird dann die rechte Seite des Zylinders A mit Öl aus dem Vorrat F gefüllt. Um die oberste Endlage bei B zu erreichen, müssen die Kolben K1 und K2 stufenweise wiederholt angehoben werden. Nach Erreichen der Endlage von B1 wird das System B2 im Gegentakt zum System B1 angehoben und befüllt, da der Kolben von A in Gegenrichtung bewegt wird. Gleichzeitig wird aufgrund des Gewichtes G der Kolben nach unten gedrückt und ein Druck erzeugt, der das Öl aus C in die Druckleitung 4 zur Turbine T presst und die Turbine und damit den Generator E antreibt, der Strom erzeugt. Gleichzeitig wird aus B1 und B2 das Öl über die Leitung 7 in den Ausgleichbehälter F zurückgeführt und das Öl im Turbinenkreislauf D wird über die Leitung 3 weiter in den Druckbehälter C gefördert. Mit V sind Steuerventile bezeichnet, die die Leitungen frei schalten und sperren. Die wirksame Kolbenfläche ist Z = 2 x Z1, Z2.

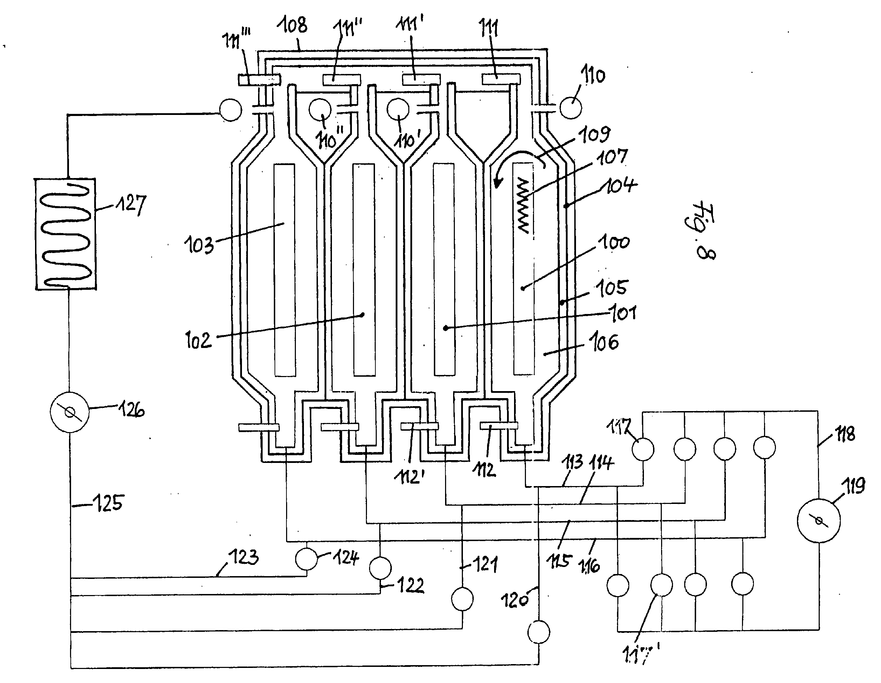

Die Anordnung nach Fig. 8 zeigt eine weitere Ausführungsform einer Energiegewinnungs- und Wärmeumwandlungseinrichtung nach der Erfindung mit Misch- und Wärmeaustausch, bei der die Ausdehnungseinheiten 100, 101, 102, 103 von jeweils einem Behälter 104 umgeben sind, der innen und außen isoliert ist und der zwischen seiner inneren Isolierung 105 und der jeweiligen Ausdehnungseinheit 100 einen die Ausdehnungseinheit umströmenden Luftführungskanal 106 ausbildet. Die Ausdehnungseinheiten werden jeweils durch eine elektrische Heizvorrichtung 107 aufgeheizt und sind zu einem gemeinsamen Gehäuse zusammengefasst, wobei jede Ausdehnungseinheit für sich in dem Behälter 104 innerhalb des Gesamtgehäuses 108 untergebracht ist. Innerhalb eines jeden Teilbehälters 104 ist die Ausdehnungseinheit 100 von einem Fluid 109 umströmt, diese Strömung ist jeweils durch ein Luftventil 110 und eine Misch-Schiebervorrichtung 111 am oberen sowie ein Schieber 111 am unteren Ende des Teilbehälters steuerbar. Die einzelnen Luftführungskanäle 106 sind durch Leitungen113, 114, 115, 116 über ein System von Sperrventilen 117 über eine gemeinsame Leitung 118 mit einem Gebläse 119 verbunden, des weiteren sind die Leitungen 113 - 116 mit Leitungen 120 - 123, in die Sperrventile 124 eingesetzt sind, mit einer gemeinsamen Leitung 125 über ein Gebläse 126 geschaltet, das Warmluft bzw. erwärmtes Fluid für Zwecke der Raumheizung 127 abgibt.

Die Misch- und Wärmeaustauschvorrichtung nach Fig. 8 arbeitet wie folgt: Zum Anlaufen des Betriebes sind alle Schieber und Ventile geschlossen und die nicht isolierten Ausdehnungseinheiten 100 - 103 nehmen den Ruhezustand ein. Zunächst wird eine Ausdehnungseinheit 100 aufgeheizt (z.B. auf einen Temperaturwert von 120° C), vorzugsweise durch elektrische Beheizung innerhalb der Ausdehnungsein-heit. Damit verlängern sich die Ausdehnungskörper um eine bestimmte Strecke und leisten entsprechend Arbeit an der Zylinder/Kolbenanordnung (nach Fig. 1 bzw. nach Fig. 7). Die Heizung wird anschließend abgeschaltet und die Schieber 111, 112, 111', 112' sowie die Sperrventile 127 und 128 werden geöffnet. Das Gebläse 119 setzt das Fluid 106, z.B. Luft, in Umlauf, während die Ausdehnungseinheit 100 erwärmt wird und nach entsprechender Zeit des Umlaufs wird die Wärme an die Ausdehnungs-einheit 101 abgegeben. Da die Ausdehnungseinheit 100 nicht mehr beheizt wird, tritt ein Wärmeaustausch ein und die Ausdehnungseinheit 101, die im Ruhezustand eine Temperatur von z.B. 20° C hat, nimmt allmählich eine Temperatur von 70° C an, ebenso die Ausdehnungseinheit 100. Durch die Temperaturreduzierung bzw. den Wärmeaustausch in der Ausdehnungseinheit 100 auf 70° findet in den Ausdehnungs-körpern eine Längenkürzung aufgrund des Zusammenziehens der Körper statt, so dass eine Arbeitsbewegung des Kolbens der Zylinder/Kolbenanordnung erfolgt und damit Energie erzeugt wird. Nun wird die Ausdehnungseinheit 101 auf einen Temperaturwert von z.B. 120° aufgeheizt, der Arbeitskolben erreicht einen Endanschlag aufgrund der Ausdehnung des Ausdehnungskörpers und leistet wieder entsprechende Arbeit. Die Ausdehnungseinheit 100 kühlt ab und dadurch wird aufgrund des Zusammenziehens der Ausdehnungskörper wieder Arbeit geleistet und Energie erzeugt. Dieses Arbeits-spiel wird unter Einbeziehung der Ausdehnungseinheiten 111" und 111''' sowie weiterer Ausdehnungseinheiten wiederholt. Dabei wird jeweils beim Abkühlvorgang der Ausdehnungseinheiten durch entsprechendes Öffnen der Sperrventile 117, 117', .... und durch Öffnen der Luftventile 110, 110', ... sowie durch Einschalten des Gebläses 123 Warmluft aus der Misch- und Wärmeaustauscheinrichtung abgezogen und z.B. in einem Heizkörper 127 zur Raumerwärmung abgezogen, um die bei der Abkühlung der Ausdehnungseinheiten anfallende Wärme sinnvoll zu nutzen.

Bei der in Fig. 9 dargestellten Gesamtanordnung einer Wärmemisch- und -austauscheinrichtung, die in entsprechender Weise wie in Fig. 8 beschrieben arbeitet, besteht die Aufheizvorrichtung z.B. aus einer massiven Metallplatte 1, die auf einen bestimmten Temperaturwert (von z.B. 120°) aufgeheizt wird und für den Anlauf konstant auf diesem Temperaturwert gehalten wird, ferner aus einer Isolierung 2, die die aufgeheizte Metallplatte 1 allseitig umschließt, und einer Öffnungsstelle 3 zum Ein- und Ausführen der aufgeheizten Metallplatte.

Die Anordnung P besteht aus einer Anzahl von Ausdehnungskörpern 4 in Form von Rohren, Stangen, Platten oder dergl. aus Metall, die wahlweise massiv oder hohl ausgebildet sind und die mit der Metallplatte 1 aus der Aufheizvorrichtung A in Wärmeübertragungskontakt gebracht werden bzw. angedockt sind, aus einer Isolierung 5 und aus einer Öffnungsstelle 6 der Isolierung, durch die hindurch die Aufheizvorrichtung 1 in die Anordnung P eingeführt wird. Die Wärmekapazität von P (Metall) und von B1 - B19 (Fluid) ist unterschiedlich und muss aufeinander abgestimmt werden.

Mit B ist ein Behälter dargestellt, der aus einer Vielzahl von übereinander angeordneten Teilbehältern B1 - B19, die jeweils aus einem Aufheizelement 7, einer das Aufheizelement allseitig umschließenden Isolierung 8, einer Führung 9, die das Aufheizelement 7 gegenüber dem Behälter B verschiebt, und einer Öffnungsstelle 10 der Isolierung 8, durch die der Aufheizkörper den Behälter verlassen und wieder zurückkehren kann, besteht. Die Isolierung 8 umschließt den Behälter B allseitig. Auf seiner Rückseite ist der Behälter B mit Hilfe einer Befestigungsvorrichtung 11 mit einer Hubvorrichtung 12 verbunden, die in Figur 2 in Form einer Hubkette bzw. eines Hubseiles 13 dargestellt ist, die über Antriebsräder 14 und einen Führungsschlitten 15 geführt ist, derart, dass der Behälter B schrittweise im Takt der Anpassung der Höhenstellung der Teilbehälter B1 - B19 auf die Position der Anordnung P angehoben bzw. abgesenkt wird, so dass stufenweise die Aufheizelemente der Teilkammern zugeordnet werden. Auf der entgegengesetzten Seite des Behälters B ist an der Hubvorrichtung ein Gegengewicht 16 zum Gewichtsausgleich des Behälters B vorgesehen.

Der Betriebsablauf dieser Anordnung wird nachstehend erläutert. Die Aufheizvorrichtung A wird dauerhaft auf eine konstante Temperatur von z.B. 120° aufgeheizt. Parallel dazu wird der Behälter B mit seinen Teilbehältern B1 - B19 auf von Teilbehälter zu Teilbehälter fallende bzw. steigende Temperaturwerte erhitzt, wobei die jeweilige Temperatur vom obersten bis zum untersten Teilbehälter abnimmt, wie in Tabelle 1 der Figur 10 dargestellt ist. Nach dem Aufheizvorgang von A und B wird die Heizvorrichtung 1 von A aus ihrer Isolierung heraus bewegt und unter gleichzeitigem Öffnen der isolierenden Hülle 5 an die Anordnung P bzw. deren Wärmetauschplatte 4 angedockt bzw. in unmittelbaren physischen Kontakt mit dem Ausdehnungskörper 4 gebracht, der durch die Vorrichtung 1 rasch auf eine Temperatur von z.B. 110° aufgeheizt wird. Sobald diese Temperatur erreicht ist, wird die Vorrichtung 1 zurück in die Isolierhülle 2 von A gebracht und die Isolierhülle 2 an der Stelle 3 geschlossen. Anschließend wird aus dem Behälter B der Teilbehälter B1 aus der Isolierung heraus an die Anordnung 4 bewegt, und in Wärmetauschkontakt damit gebracht, so dass B1 durch P auf einen Temperaturwert erhitzt wird, der z.B. den in Figur 4 (Tabelle 2) angegebenen Werten für alle Teilbehälter B1 - B19 nacheinander entspricht. Nach der Wärmeübergabe wird B1 in die Ausgangsposition in B zurückgeführt, die Isolierhülle von P und auch von B wird wieder geschlossen. Der bei P auftretende Temperaturunterschied wird zur Erwärmung der Ausdehnungskörper in P verwendet.

Der vorbeschriebene Vorgang des Wärmeaustausches läuft für sämtliche weiteren Teilbehälter B2 - B19 in einem kontinuierlichen Zyklus wiederholt ab, wobei der gesamte Behälter B angehoben bzw. abgesenkt wird, um die Teilbehälter der Einrichtung B auf gleiche Höhe mit der Anordnung P zu bringen, und anschließend in umgekehrter Reihenfolge beginnend mit B17 und endend mit B1 bewegt wird, wie in Figur 5 mit Tabelle 3 gezeigt, mit dem Unterschied, dass die jeweiligen Teilbehälter B1 - B19 unterhalb der Anordnung P zur Wärmeübertragung in Kontakt mit P gebracht werden.

Die Erfindung ist nicht auf die im Ausführungsbeispiel beschriebene Darstellung beschränkt. So kann beispielsweise die Anordnung P, die vorstehend als stationär bezeichnet ist, beweglich ausgeführt sein und in den Behälter B bzw. die einzelnen Teilbehälter B1 - B19 verfahren werden, oder aber die Aufheizvorrichtung A kann stationär ausgebildet sein und die Anordnung P zur Wärmeübertragung verfahren und in Wärmeübertragungskontakt gebracht werden.

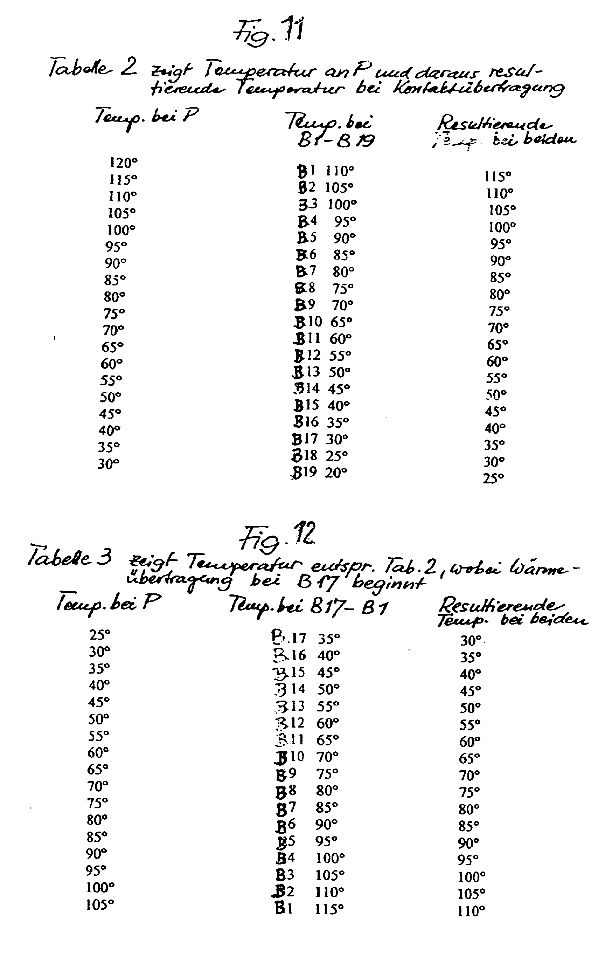

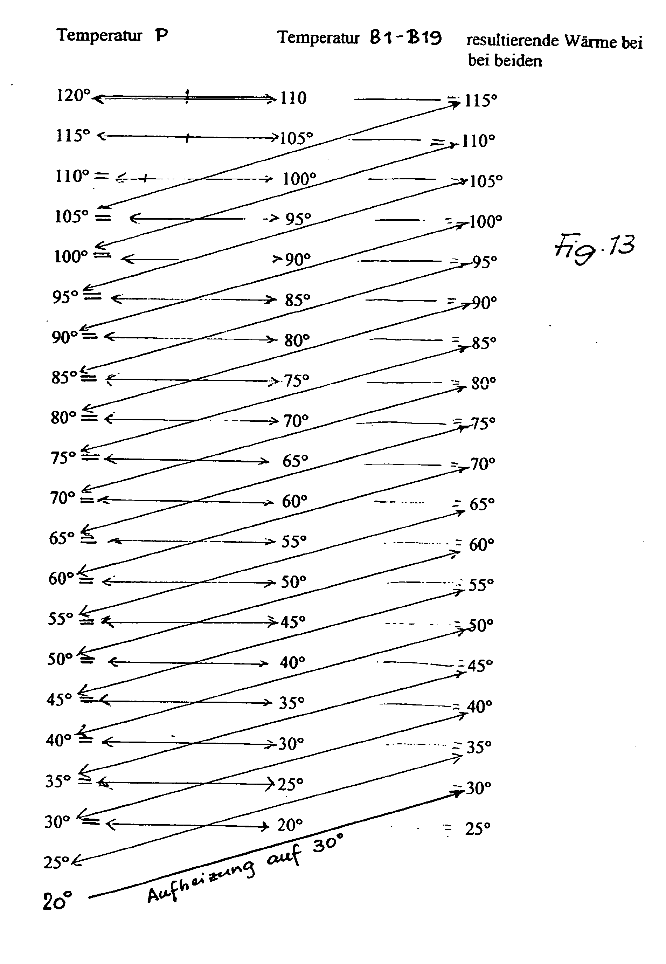

Die Tabelle 1 der Fig. 10 gibt die Temperaturen an, die in einem Arbeitszyklus durch Aufheizung in den Teilmischbehältern B1 - B19 erzeugt wird. Die Tabelle 2 nach Fig. 11 gibt die Temperatur im Verlauf eines Arbeitszyklus einer Ausdehnungseinheit in der Zuordnung zu der Vorheiztemperatur innerhalb der Teilmischbehälter B1 - B19 nach Fig. 10 sowie die resultierende Temperatur, die sich durch Zusammenwirken der beiden Einheiten ergibt, und zwar bei in konstanten Schritten abnehmender Temperatur, und Tabelle 3 der Fig. 12 die entsprechenden Temperaturen in umgekehrter, ansteigender Reihenfolge entsprechend der Tabelle 2 an. Die Fig. 13 stellt eine Gesamttabelle 4 dar, in der der Zusammenhang der Tabellen 2 und 3 gezeigt ist.

Fig. 14 zeigt eine der Darstellung nach Fig. 9 entsprechende weitere Ausgestaltung einer Misch- und Wärmeaustauschanordnung, bei der die einzelnen vorgeheizten Teilmischbehälter in Kreisform angeordnet sind, der Wärmeaustausch über ein strömendes Medium, z.B. Flüssigkeit oder Gas erfolgt, und eine Pumpe über entsprechende Sperrventile jeweils die Ausdehnungseinheit nacheinander mit jedem einzelnen Teilmischbehälter verbindet.

Die Anlage nach Figur 14 besteht aus einer Aufheizvorrichtung A, einer Ausdehnungseinheit P nach dem Hauptpatent mit Ausdehnungskörpern, die beheizt werden und einem Behälter B, der aus isolierten Teilbehältern B1 - B19 besteht, die vorzugsweise mit einem Fluid, z.B. Wasser oder Öl, gefüllt sind. Die Misch- und Wärmetausch-Teilbehälter B1 - B19 und die Ausdehnungseinheit P sind parallel zueinander in Kreisform in ein System von isolierten Leitungen L1, L2 über Sperrventile V eingebunden, damit die Teilbehälter B1 - B19 unabhängig voneinander mit der Ausdehnungseinheit A zusammengeführt und in Wärmeaustauschbeziehung miteinander gebracht werden können. Die Teilbehälter B1 - B19 haben im Gegenuhrzeigersinn fallende Temperaturen und im Uhrerzeigersinn steigende Temperaturen für das Mischen und Wärmetauschen der Temperatur mit der Ausdehnungseinheit, z.B. in Schritten von jeweils 5° C. Der jeweilige entsprechende Teilbehälter und die Ausdehnungseinheit sowie die Leitungsabschnitte werden von den für den Wärmeübergang bestimmtem Fluid durchströmt und führen den Wärmetausch mit der Ausdehnungseinheit durch. Hierzu dient eine Pumpe P1, die nacheinander die einzelnen Teilbehälter B1 - B19 mit der Ausdehnungseinheit in Fluidverbindung schaltet. Eine weitere Pumpe P2 ist in einen Kreislauf für einen Raumwärmekreis R eingeschaltet, mit dem von B1 Wärme bei einer Temperatur von z.B. Raumtemperatur von 20° entnommen werden kann. Dieser Kreis wird ausschließlich zu Raumheizzwecken genutzt. Der Misch- und Wärmetausch-Vorgang verläuft analog dem Vorgang nach dem System der Fig. 9 und den Tabellen nach den Figuren 10 - 13.

Die Arbeitsweise der Anordnung nach Fig. 14 ist wie folgt: Die Aufheizvorrichtung A wird dauerhaft auf eine Temperatur von z.B. 120° C aufgeheizt und sie beheizt die Teilbehälter B1 - B19 auf von Teilbehälter zu Teilbehälter fallende Temperaturen, die schrittweise nach Tabelle 1 um z.B. 5° reduziert werden, beginnend mit 110° für B1 und endend mit 20° für B19. Die Teilbehälter sind vollständig isoliert, die Isolation wird für die Aufheizung geöffnet und anschließend nach beendeter Aufheizung wieder geschlossen. Dann beginnt der Misch- bzw. Wärmeaustauschvorgang, indem die Temperatur des Mediums, z.B. Wasser, Öl, Gas in den Teilbehältern nacheinander mit der Temperatur der Ausdehnungseinheit P gemischt und Wärme ausgetauscht wird, also der Temperaturwert 120° von P mit dem Temperaturwert 110° von P1 kombiniert wird, so dass P auf einen Temperaturwert von 115° reduziert wird. Im Anschluss daran wird der Temperaturwert 115° von P mit dem Temperaturwert 105° von B2 kombiniert und dadurch der Temperaturwert von P auf 110° reduziert, usw. Hierbei tritt stets gleichzeitig nur ein einziger der Teilbehälter B1 - B19 mit der Ausdehnungseinheit P in Wärmeaustausch, bis P einen Temperaturwert von 25° C erreicht hat. Dann wird der Kreislauf zwischen den Teilbehältern B1 - B19 und der Ausdehnungseinheit P geschlossen, die Pumpe P1 wird abgeschaltet und die Pumpe P2 aktiviert den Kreis zwischen Kühler K und Ausdehnungseinheit P. Durch die Temperaturabgabe an den Kühler K wird die Temperatur von 25° auf 20° reduziert, die Ausdehnungseinheit P zieht sich zusammen und führt einen Arbeitshub aus. Hat P den Wert von 20° erreicht, erfolgt eine Umschaltung auf B19. Die Steuerung schaltet P2 ab und P1 an und mischt P mit B18, und zwar einen Temperaturwert von 20° mit einem Temperaturwert von 30°, so dass insgesamt ein Temperaturwert von 25° in B18 erzielt wird. Damit erfahren die Ausdehnungskörper eine Längung. Anschließend wird B17 auf 30° erwärmt und der Temperaturmisch- und Wärmeaustauschvorgang verläuft in Hinblick auf Tabelle 4 in umgekehrter Richtung, d.h. im Uhrzeigersinn nach Fig. 14, wobei in diesem Abschnitt des Zyklus die Temperatur der Teilbehälter höher ist als die Temperatur der Ausdehnungseinheit, so dass die Ausdehnungseinheit von dem jeweiligen Teilbehälter aufgeheizt wird. Hat der Teilbehälter B1 die Endtemperatur 110° und die Ausdehnungseinheit ebenfalls den Temperaturwert von 110° erreicht, muss die Ausdehnungseinheit durch entsprechende Steuerung auf den Temperaturwert von 120° aufgeheizt, d.h. der Temperaturwert um 10° erhöht werden, damit wieder die Ausgangstemperatur von 120° für den nächsten Zyklus innerhalb der Tabelle 4 erreicht wird.

## Patentansprüche

1. Anordnung zum Gewinnen von Energie durch Erzielen einer thermischen Ausdehnung und durch Umwandlung dieser Ausdehnung in Arbeit, umfassend:
a) einen stabilen, geschlossenen, isolierten Rahmen (2), **gekennzeichnet durch**
b) eine Mehrzahl von n parallel zueinander geschalteten, **durch** zugeführte Wärme ausdehnbare Ausdehnungskörper (12, 13, 14, 15), wobei an einer Stirnseite zumindest eines Ausdehnungskörpers (15) eine Zylinder-/Kolbenanordnung vorgesehen ist, dessen Kolben die **durch** Erwärmung erzielte Längung des zumindest einen Ausdehnungskörpers aufnimmt sowie über Hydrauliksteuerung den Kolbenhub in beiden Bewegungsrichtungen in Hydraulikdruck umwandelt und in einer Arbeitsmaschine nutzt,
c) eine Vorrichtung zum Beheizen der oder zum Zuführen von Wärme an die Ausdehnungskörper, und
d) eine mit der weiteren Stirnseite des zumindest einen Ausdehnungskörpers verbundene Hubvorrichtung, an die die Summe der Ausdehnungshübe der Ausdehnungskörper direkt oder über eine Übersetzungsvorrichtung übertragen wird, wobei
e) die Aufheizung der Ausdehnungskörper **durch** einen heißen Energieträger oder durch eine elektrische Beheizung erfolgt, wobei der Energieträger in Form von Flüssigkeit oder Gas über ein Heizsystem zu- und abgeführt wird.

2. Anordnung nach Anspruch 1, **dadurch gekennzeichnet, dass** die Ausdehnungskörper (12, 13, 14, 15) in Kaskade geschalteten sind.

3. Anordnung nach Anspruch 1 oder 2, **dadurch gekennzeichnet, dass** ein erster Ausdehnungskörper (12) an seiner vorderen Stirnseite starr mit dem Rahmen (2) und dessen hintere Stirnseite mit der hinteren Stirnseite des nach geschalteten, zweiten Ausdehnungskörpers (13) verbunden ist, dass die vordere Stirnseite des zweiten Ausdehnungskörpers (13) mit der vorderen Stirnseite des nach geschalteten (n-1)-ten Ausdehnungskörpers (14) und die hintere Stirnseite des (n-1)-ten Ausdehnungskörpers (14) mit der hinteren Stirnseite des n-ten Ausdehnungskörpers (15) fest verbunden ist, wobei Hebelanordnungen mit Gelenkverbindungen vorgesehen sind, die jeweils zwei benachbarte vordere und abwechselnd hintere Stirnseiten zweier benachbarter Ausdehnungskörper (12, 13, 14, 15) mittig mit dem Rahmen (2) verbinden.

4. Anordnung nach einem der vorhergehenden Ansprüche, **dadurch gekennzeichnet, dass** die Ausdehnungskörper (12, 13, 14, 15) mit dem sie umschließenden Rahmen eine bauliche Einheit bilden und dass eine Mehrzahl derartiger Ausdehnungseinheiten (12, 13, 14, 15) zu der Anordnung zusammengefügt ist, die einen geschlossenen, die Ausdehnungskörper aufnehmenden Raum darstellt.

5. Anordnung nach einem der vorhergehenden Ansprüche, **dadurch gekennzeichnet, dass** die Heizvorrichtung ein Heizkessel einer Heizanlage, z.B. für ein Gebäude ist, die in herkömmlicher Weise Heizkörper einer zentralen Warmwasser-Heizung speist, und dass vom Heizkessel Warmwasserleitungen Heißwasser in den unteren Eingang einer Einheit I zu- und aus dem oberen Ausgang der Einheit II ab- und zum Heizkessel geführt sind, damit die Ausdehnungskörper der Einheit I aufgeheizt werden, und gleichzeitig im Gegentakt phasenversetzt abgekühltes Wasser durch die Einheit II geführt und in den Heizkessel zurückgeführt wird.

6. Anordnung nach einem der vorhergehenden Ansprüche, **dadurch gekennzeichnet, dass** die Ausdehnungskörper als beheizbare Körper bzw. Hohlrohre ausgebildet sind und in einem starren Rahmen so angeordnet sind, dass die aufgrund der Beheizung erzielten Ausdehnungshübe der Ausdehnungskörper von einem Körper auf den nachfolgenden übertragen und die Strecken (X) der Ausdehnung der Körper addiert werden, und zwar derart, dass am Ende der Kaskade die n-fache Ausdehnung vorliegt.

7. Anordnung nach einem der vorhergehenden Ansprüche, **dadurch gekennzeichnet, dass** zur Optimierung der Nutzung und zum Mischen sowie Wärmetauschen der zugeführten Wärmeenergie
a) einer Gruppe von Ausdehnungseinheiten eine aus einer Mehrzahl von Wärmekammern bestehende Wärmetauscheinrichtung (B) zugeordnet ist, deren Teilbehälter (B1 - B19) auf in Stufen voneinander abweichende Temperaturwerte aufgeheizt werden, die nacheinander und fortlaufend mit den Ausdehnungseinheiten zur Übertragung und zum Austausch von Wärme zusammengeführt werden,
b) eine zusätzliche, auf eine fest vorgegebene konstante Temperatur aufgeheizte und auf dieser konstanten Temperatur gehaltene Aufheizvorrichtung (A) vorgesehen ist,
c) die Aufheizvorrichtung (A) mit den Ausdehnungseinheiten (P) zur Wärmeübertragung verbindbar ausgebildet ist, so dass die Temperatur der Ausdehnungseinheiten (P) auf die Temperatur der Wärmevorrichtung von A gebracht wird und nach Erreichen dieser Temperatur wieder in die Ausgangsposition zurückgeführt wird, und
d) die Teilbehälter (B1- B19) der Wärmetauscheinrichtung (B) fortlaufend und nacheinander in abnehmender und im Anschluss daran in aufsteigender Folge in Kontakt gebracht werden, bis ein Temperaturausgleich erzielt ist und die Teilbehälter wieder in ihre Ausgangsposition innerhalb der Einrichtung (B) zurückgeführt werden, und in der Einrichtung (B) der nächstfolgende Teilbehälter (B2) bereit gestellt wird, um mit der jeweiligen Ausdehnungseinheit (P) in Kontakt und in Wärmeaustausch zu kommen, und so fort, bis der letzte Teilbehälter (B19) den Wärmeaustausch vorgenommen hat, und anschließend der Vorgang beginnend mit den Teilbehältern (B18 - B1) in entgegengesetzten Sinn zur Durchführung des Wärmeaustausches durchlaufen und dann der Durchlauf der Schritte a) bis d) fortlaufend und kontinuierlich wiederholt wird.

8. Anordnung nach Anspruch 7, **dadurch gekennzeichnet, dass** die Aufheizvorrichtung (A), die Wärmetauscheinrichtung (B) und die Teilbehälter (B1 - B19) jeweils in einer wärmeisolierten Hülle angeordnet sind, die zum Entnehmen und Aufnehmen des Energieträgers kurzzeitig und selbsttätig entsprechend dem Takt des jeweiligen Andockens geöffnet bzw. geschlossen wird.

9. Anordnung nach einem der Ansprüche 7 oder 8, **dadurch gekennzeichnet, dass** die Wärmetauscheinrichtung (B) ein höhenverstellbares, wärmeisolierendes Gehäuse aufweist, das durch eine Hubvorrichtung in Form einer Seilwinde oder eines Kettenantriebes schrittweise nach oben oder nach unten bewegbar im Takt des nacheinander erfolgenden Ein- und Ausfahrens der jeweiligen Teilbehälter (B1 - B19) angetrieben ist, und dass die Aufheizvorrichtung (A) wahlweise an die Ausdehnungseinheiten (P) oder umgekehrt die Wärme (B) an die Aufheizvorrichtung (A) andockbar ausgebildet ist.

10. Anordnung nach einem der Ansprüche 1 bis 9, **dadurch gekennzeichnet, dass** die Ausdehnungskörper miteinander durch eine flexible, die Ausdehnung aufnehmende Vorrichtung (89), insbesondere durch eine flexible Membran verbunden sind.

11. Anordnung nach einem der Ansprüche 1 bis 10, **dadurch gekennzeichnet, dass** die Ausdehnungseinheiten (100, 101, 102, 103) von jeweils einem Behälter (104) umgeben sind, der innen und außen isoliert ist und der zwischen seiner inneren Isolierung (105) und der jeweiligen Ausdehnungseinheit (100) einen die Ausdehnungseinheit (100) umströmenden Luftführungskanal (106) ausbildet.

12. Anordnung nach Anspruch 11, **dadurch gekennzeichnet, dass** die Behälter (104) innerhalb eines Gesamtgehäuses (108) untergebracht sind und innerhalb eines jeden Behälters (104) die jeweilige Ausdehnungseinheit (100) von dem Energieträger (109) umströmt ist.

13. Verfahren zur Speicherung und Rückgewinnung von einer Wärmetauscheinrichtung (B) zugeführten Wärmeenergie, wobei die Wärmetauscheinrichtung (B) zumindest eine Ausdehnungseinheit (P) und erste bis N-te Teilbehälter (B1 - B19) aufweist, **dadurch gekennzeichnet,**
(a) **dass** die zumindest eine Ausdehnungseinheit (P) auf eine vorgegebene Starttemperatur (T_{A}) aufgeheizt wird,
(b) **dass** die ersten bis N-ten Teilbehälter (B1 - B19) auf jeweils eine vorbestimmte erste bis N-te Speichertemperatur aufgeheizt werden, wobei die erste bis N-te Speichertemperatur vom ersten bis zum N-ten Teilbehälter (B1 - B19) stufenweise abnehmen,
(c) **dass** die ersten bis N-ten Teilbehälter (B1 - B19) beginnend mit dem ersten Teilbehälter (B1) nacheinander mit der zumindest einen Ausdehnungseinheit (P) in Wärmeaustauschbeziehung gebracht werden und jeweils nach Erreichen einer resultierenden ersten bis N-ten Ausgleichstemperatur des jeweiligen ersten bis N-ten Teilwärmespeichers (B1 - B19) wieder getrennt werden, wodurch die vorgegebene Starttemperatur (T_{A}) der zumindest einen Ausdehnungseinheit (P) stufenweise auf eine der N-ten Ausgleichstemperatur entsprechende Temperatur reduziert wird,
(d) **dass** die der N-ten Ausgleichstemperatur entsprechende Temperatur der zumindest einen Ausdehnungseinheit (P) auf eine vorgegebene Endtemperatur abgekühlt wird,
(e) **dass** der die N-te Ausgleichstemperatur aufweisende N-te Teilbehälter (B19) auf den vorbestimmten N-ten Speichertemperaturwert abgekühlt wird,
(f) **dass** in umgekehrter Reihenfolge, beginnend mit dem N-1-ten Teilbehälter (B18) die ersten bis N-1-ten Teilbehälter (B1 - B18) nacheinander mit der zumindest einen die Endtemperatur aufweisenden Ausdehnungseinheit (P) in Wärmeaustauschbeziehung gebracht werden und jeweils nach Erreichen einer resultierenden ersten bis N-1-ten weiteren Ausgleichstemperatur des jeweiligen ersten bis N-1-ten Teilbehälter (B1 - B18) wieder getrennt werden, wodurch die Endtemperatur der zumindest einen Ausdehnungseinheit (P) stufenweise auf eine der ersten Ausgleichstemperatur entsprechende Temperatur erhöht wird,
(g) **dass** die zumindest eine Ausdehnungseinheit (P) von der ersten Ausgleichstemperatur auf die vorgegebene Starttemperatur (T_{A}) aufgeheizt wird und
(h) die vorstehenden Schritte (c) - (g) kontinuierlich und fortlaufend wiederholt werden.

14. Verfahren zur Speicherung und Rückgewinnung von einer einer Wärmetauscheinrichtung (B) zugeführten Wärmeenergie, wobei die Wärmetauscheinrichtung (B) zumindest eine Ausdehnungseinheit (P) und erste bis N-te Teilbehälter (B1 - B 19) aufweist,
**dadurch gekennzeichnet,**
(a) **dass** die zumindest eine Ausdehnungseinheit (P) auf eine vorgegebene Starttemperatur (T_{A}) aufgeheizt wird,
(b) **dass** die ersten bis N-ten Teilbehälter (B1 - B 19) auf jeweils eine vorbestimmte erste bis N-te Speichertemperatur aufgeheizt werden, wobei die erste bis N-te Speichertemperatur vom ersten bis zum N-ten Teilbehälter (B1 - B 19) stufenweise zunehmen,
(c) **dass** die ersten bis N-ten Teilbehälter (B1 - B19) beginnend mit dem ersten Teilbehälter (B1) nacheinander mit der zumindest einen Ausdehnungseinheit (P) in Wärmeaustauschbeziehung gebracht werden und jeweils nach Erreichen einer resultierenden ersten bis N-ten Ausgleichstemperatur, des jeweiligen ersten bis N-ten Teilbehälter (B1 - B19) wieder getrennt werden, wodurch die Starttemperatur der zumindest einen Ausdehnungseinheit (P) stufenweise auf eine der N-ten Ausgleichstemperatur entsprechende Temperatur erhöht wird,
(d) **dass** die der N-ten Ausgleichstemperatur entsprechende Temperatur der zumindest einen Ausdehnungseinheit (P) auf eine vorgegebene Endtemperatur aufgeheizt wird,
(e) **dass** der die N-te Ausgleichstemperatur aufweisende N-te Teilbehälter (B19) auf den vorbestimmten N-ten Speichertemperaturwert erhöht wird,
(f) **dass** in umgekehrter Reihenfolge, beginnend mit dem N-1-ten Teilbehälter (B18) die ersten bis N-1-ten Teilbehälter (B1 - B18) nacheinander mit der zumindest einen die Endtemperatur aufweisenden Ausdehnungseinheit (P) in Wärmeaustauschbeziehung gebracht werden und jeweils nach Erreichen einer resultierenden ersten bis N-1-ten weiteren Ausgleichstemperatur des jeweiligen ersten bis N-1-ten Teilbehälters (B1 - B18) wieder getrennt werden, wodurch die Endtemperatur der zumindest einen Ausdehnungseinheit (P) stufenweise auf eine der ersten Ausgleichstemperatur entsprechende Temperatur reduziert wird,
(g) **dass** die zumindest eine Ausdehnungseinheit (P) von der ersten Ausgleichstemperatur auf die vorgegebene Starttemperatur (T_{A}) abgekühlt wird und
(h) die vorstehenden Schritte (c) - (g) kontinuierlich und fortlaufend wiederholt werden.

15. Verfahren nach Anspruch 13 oder 14, **dadurch gekennzeichnet, dass** zum Abkühlen der die N-te Ausgleichstemperatur aufweisenden Ausdehnungseinheit (P) auf eine vorgegebene Endtemperatur und/oder zum Abkühlen des die N-te Ausgleichstemperatur aufweisenden N-ten Teilbehälters (B19) auf die vorbestimmte N-te Speichertemperatur Wärmeenergie abgeführt wird.

16. Verfahren nach einem der Ansprüche 13 bis 15, **dadurch gekennzeichnet, dass** durch den Wärmeaustauschvorgang jedem ersten bis N-ten Teilbehälter (B1 - B19) zunächst jeweils dieselbe Wärmeenergie zugeführt und anschließend jedem ersten bis N-ten Teilbehälter (B1 - B19) jeweils dieselbe Wärmeenergie wiederum entzogen wird.

17. Verfahren nach einem der Ansprüche 13 bis 16, **dadurch gekennzeichnet, dass** durch das stufenweise Abkühlen und/oder Aufheizen durch die zumindest eine Ausdehnungseinheit (P) mechanische Energie erzeugt wird.

18. Verfahren nach Anspruch 17, **dadurch gekennzeichnet, dass** die mechanische Energie über zumindest einen in der Ausdehnungseinheit (P) vorgesehenen Ausdehnungskörper (12, 13, 14, 15) erzeugt wird, der sich bedingt durch das stufenweise Abkühlen und Aufheizen der Ausdehnungseinheit (P) schrittweise ausdehnt bzw. zusammenzieht.

19. Verfahren nach einem der Ansprüche 13 bis 18, **dadurch gekennzeichnet, dass** der erste bis N-te Teilbehälter (B1 - B19) jeweils als nach außen vollständig isolierter Behälter ausgebildet werden, welche jeweils einen inneren und einen äußeren Abschnitt aufweisen, die jeweils mit einem Energieträger, insbesondere einer Flüssigkeit oder einem Gas gefüllt sind.

## Claims

1. Arrangement for recovering energy by producing a thermal expansion and by converting this expansion into working energy, comprising:
a) a stable, closed, insulated frame (2) **characterised by**
b) a number of n expansion bodies (12, 13, 14, 15) which are connected in parallel with one another and which can be expanded by a supply of heat, wherein on one end face of at least one expansion body (15) there is a piston-cylinder arrangement whose piston takes up the lengthening of the at ieast one expansion body which is achieved through heating, as well as converts the piston stroke in two directions of movement by hydraulic control into hydraulic pressure and utilises it in a working machine,
c) a device for heating or supplying heat to the expansion body, and
d) a lift device connected to the further end face of the at least one expansion body at which the sum of the expansion strokes of the expansion bodies is transferred directly or via a translation device, wherein
e) the heating up of the expansion bodies is carried out by a hot energy carrier or by electric heating wherein the energy carrier is supplied and discharged in the form of fluid or gas via a heating system.

2. Arrangement according to claim 1 **characterised in that** the expansion bodies (12,13,14,15) are connected in cascades.

3. Arrangement according to claim 1 or 2 **characterised in that** a first expansion body (12) is connected at its front end face rigidly to the frame (2) and its rear end face is connected to the rear end face of the second expansion body (13) which is on the output side, that the front end face of the second expansion body (13) is fixedly connected to the front end face of the following (n-1)th expansion body (14) and the rear end face of the (n-1)th expansion body (14) is fixedly connected to the rear end face of the n-th expansion body (15) wherein lever arrangements are provided with articulated connections which each connect two adjoining front and in alternation rear end faces of two adjoining expansion bodies (12, 13, 14, 15) centrally to the frame (2).

4. Arrangement according to one of the preceding claims **characterised in that** the expansion bodies (12, 13, 14, 15) together with the frame enclosing same form one structural unit and that a number of such expansion units (12, 13, 14, 15) are combined into the arrangement which represents one closed chamber housing the expansion bodies.

5. Arrangement according to one of the preceding claims **characterised in that** the heating device is a heating boiler of a heating system, e.g. for a building, which in the conventional way feeds heating bodies of a central hot water heating system and that hot water pipes from the heating boiler supply hot water from the boiler into the lower input of one unit I and from the upper output of the unit II back to the heating boiler so that the expansion bodies of the unit I are heated up, and at the same time cooled water is passed phase-offset in a countercycle through the unit II and back into the heating boiler.

6. Arrangement according to one of the preceding claims **characterised in that** the expansion bodies are designed as heatable bodies or hollow tubes and are arranged in a rigid frame so that the expansion strokes of the expansion bodies obtained as a result of being heated are transferred from one body to the next and the distances (X) of the expansion of the bodies are added up, namely so that the n-times expansion is present at the end of the cascade.

7. Arrangement according to one of the preceding claims **characterised in that** for optimizing the utilisation and for mixing as well as heat exchanging of the thermal energy supplied
a) one group of expansion units is assigned a heat exchanger device (B) which consists of a number of heat chambers and whose sub-containers (B1-B19) are heated up to temperature values which deviate from one another in stages and which are brought together continuously in succession with the expansion units for transferring and exchanging heat,
b) an additional heating device (A) is provided which is heated to a fixedly pre-set constant temperature and is maintained at this constant temperature,
c) the heating device (A) is designed to be connectable to the expansion units (P) for heat transfer so that the temperature of the expansion units (P) is brought to the temperature of the heating device by A and after reaching this temperature is again returned to the starting position, and
d) the sub-containers (B1-B19) of the heat exchanger device (B) are brought into contact continuously in succession in decreasing and then in increasing sequence until a temperature equilibrium is achieved and the sub-containers are then returned again to their starting position inside the device (B), and in the device (B) the next following sub-container part (B2) is set ready in order to come into contact and heat exchange with the relevant expansion unit (P), namely thus continuing in this way until the last sub-container part (B19) has carried out the heat exchange, and then the process starts again in the opposite sense beginning with the sub-containers (B18 - B1) to implement the heat exchange and then the cycle of steps a) to d) is serially repeated continuously.

8. Arrangement according to claim 7 **characterised in that** the heating device (A), the heat exchange device (B) and the sub-containers (B1- B19) are each arranged in a thermally insulated cover which for removing and receiving the energy carrier is opened and closed respectively temporarily and automatically corresponding to the timing of the relevant docking.

9. Arrangement according to one of claims 7 or 8 **characterised in that** the heat exchange device (B) has a height-adjustable heat-insulating housing which is driven by a lift mechanism in the form of a cable winch or a chain drive movable up and down stepwise in the rhythm of the successively occurring inward and outward movement of the relevant sub-container part (B1- B19) and that the heating device (A) is designed so that it can be selectively connected to the expansion units (P) or conversely the heat (B) can be connected to the heating device (A).

10. Arrangement according to one of claims 1 to 9 **characterised in that** the expansion bodies are connected to one another by a flexible device (89), more particularly a flexible membrane, which can take up the expansion.

11. Arrangement according to one of claims 1 to 10 **characterised in that** the expansion units (100, 101, 102, 103) are each surrounded by a container (104) which is insulated on the inside and outside and which forms between its inner insulation (105) and the relevant expansion unit (100) an air guide channel (106) which circulates round the expansion unit (100).

12. Arrangement according to claim 11 **characterised in that** the containers (104) are housed inside one complete housing (108) and inside each container (104) the relevant expansion unit (100) is surrounded by the flow of the energy carrier (109).

13. Method for storing and recovering thermal energy supplied to a heat exchange device (B) wherein the heat exchange device (B) has at least one expansion unit (P) and first to N-th sub-containers (B1-B19) **characterised in**
(a) **that** the at least one expansion unit (P) is heated up to a predetermined start temperature (T_{A})
(b) **that** the first to N-th sub-containers (B1- B19) are each heated to a predetermined first to N-th store temperature wherein the first to N-th store temperatures decrease stepwise from the first to the N-th sub-container part (B1-B19)
(c) **that** the first to N-th sub-containers (B1- B19) starting with the first sub-container part (B1) are brought in succession into heat exchanging relationship with the at least one expansion unit (P) and each after reaching a resulting first to N-th equilibrium temperature of the relevant first to N-th partial heat store (B1- B19) are separated again whereby the predetermined start temperature (T_{A}) of the at least one expansion unit (P) is reduced stepwise to a temperature corresponding to the N-th equilibrium temperature
(d) **that** the temperature of the at least one expansion unit (P) corresponding to the N-th equilibrium temperature is cooled down to a predetermined end temperature
(e) **that** the N-th sub-container part (B19) having the N-th equilibrium temperature is cooled down to the predetermined N-th store temperature value
(f) **that** in the reverse sequence, starting with the N-1-th sub-container part (B18) the first to N-1-th sub-containers (B1- B18) are brought successively into heat exchange relationship with the at least one expansion unit (P) having the end temperature and each after reaching a resulting first to N-1th further equilibrium temperature of the relevant first to N-1-th sub-container part (B1- B18) are separated again whereby the end temperature of the at least one expansion unit (P) is increased stepwise to a temperature corresponding to the first equilibrium temperature
(g) **that** the at least one expansion unit (P) is heated up from the first equilibrium temperature to the predetermined start temperature (T_{A}) and
(h) the preceding steps (c) - (g) are serially repeated continuously.

14. Method for storing and recovering thermal energy supplied to a heat exchange device (B) wherein the heat exchange device (B) has at least one expansion unit (P) and first to N-th sub-containers (B1- B19) **characterised in**
(a) **that** the at least one expansion unit (P) is heated to a predetermined start temperature (T_{A})
(b) **that** the first to N-th sub-containers (B1- B19) are each heated up to a predetermined first to N-th store temperature wherein the first to N-th store temperatures increase stepwise from the first to the N-th sub-containers (B1- B19)
(c) **that** the first to N-th sub-containers (B1- B19) starting with the first sub-container part (B1) are brought successively into heat exchange relationship with the at least one expansion unit (P) and each after reaching a resulting first to N-th equilibrium temperature of the relevant first to N-th sub-container part (B1- B19) are separated again whereby the start temperature of the at least one expansion unit (P) is increased stepwise to a temperature corresponding to the N-th equilibrium temperature
(d) **that** the temperature of the at least one expansion unit (P) corresponding to the N-th equilibrium temperature is heated up to a predetermined end temperature
(e) **that** the N-th sub-container part (B19) having the N-th equilibrium temperature is increased to the predetermined N-th store temperature value
(f) **that** in the reverse sequence, starting with the N-1-th sub-container part (B18) the first to N-1th sub-containers (B1- B18) are brought successively into heat exchange relationship with the at least one expansion unit (P) having the end temperature and each after reaching a resulting first to N-1-th further equilibrium temperature of the relevant first to N-1-th sub-container part (B1- B18) are separated again whereby the end temperature of the at least one expansion unit (P) is reduced stepwise to a temperature corresponding to the first equilibrium temperature
(g) **that** the at least one expansion unit (P) is cooled down from the first equilibrium temperature to the predetermined start temperature (T_{A}) and
(h) the preceding steps (c) - (g) are serially repeated continuously.

15. Method according to claim 13 or 14 **characterised in that** in order to cool the expansion unit (P) having the N-th equilibrium temperature down to a predetermined end temperature and/or in order to cool the N-th sub-container part (B19) having the N-th equilibrium temperature down to the predetermined N-th store temperature thermal energy is discharged.

16. Method according to one of claims 13 to 15 **characterised in that** through the heat exchange process first the same thermal energy is supplied each time to each first to N -th sub-container part (B1- B19) and then the same thermal energy is removed each time from each first to N-th sub-container part (B1- B19).

17. Method according to one of claims 13 to 16 **characterised in that** mechanical energy is generated through the stepwise cooling down and/or heating up through the at least one expansion unit (P).

18. Method according to claim 17 **characterised in that** the mechanical energy is generated via at least one expansion body (12, 13, 14, 15) which is provided in the expansion unit (P) and which expands and contracts stepwise conditioned by the stepwise cooling down and heating up of the expansion unit (P).

19. Method according to one of claims 13 to 18 **characterised in that** the first to the N-th sub-containers (B1- B19) are each designed as containers which are fully insulated on the outside and which each have an inner and an outer section which are each filled with an energy carrier, more particularly a fluid or a gas.

## Revendications

1. Aménagement pour produire de l'énergie en effectuant une dilatation thermique et en transformant cette dilatation en travail, comprenant :
a) un châssis stable (2) fermé et isolé, **caractérisé par**
b) une pluralité de n corps de dilatation (12, 13, 14, 15) montés parallèlement l'un à l'autre et dilatables par de la chaleur acheminée, dans lequel il est prévu, sur un côté frontal d'au moins un corps de dilatation (15), un système cylindre/piston, dont le piston absorbe l'allongement assuré par chauffage du au moins un corps de dilatation, transforme, par commande hydraulique, la course du piston dans les deux sens de déplacement en pression hydraulique et l'utilise dans une machine de travail,
c) un dispositif pour chauffer les corps de dilatation ou acheminer de la chaleur aux corps de dilatation, et
d) un dispositif de levage raccordé à l'autre côté frontal du au moins un corps de dilatation, auquel la somme des courses de dilatation des corps de dilatation est transmise directement ou par le biais d'un dispositif de transmission, dans lequel :
e) le chauffage des corps de dilatation s'effectue par une source d'énergie chaude ou par un chauffage électrique, dans lequel la source d'énergie est acheminée et évacuée sous la forme d'un liquide ou d'un gaz via un système de chauffage.

2. Aménagement selon la revendication 1, **caractérisé en ce que** les corps de dilatation (12, 13, 14, 15) sont montés en cascade.

3. Aménagement selon la revendication 1 ou 2, **caractérisé en ce qu'**un premier corps de dilatation (12) est raccordé de manière rigide, sur son côté frontal avant, au châssis (2) et, sur son côté frontal arrière, au côté frontal arrière du deuxième corps de dilatation (13) monté en aval, **en ce que** le côté frontal avant du deuxième corps de dilatation (13) est raccordé de manière fixe au côté frontal avant du (n-1) ème corps de dilatation (14) monté en aval et le côté frontal arrière du (n-1)ème corps de dilatation (14) est raccordé de manière fixe au côté frontal arrière du nème corps de dilatation (15), dans lequel on prévoit des aménagements de leviers avec des raccords articulés, qui raccordent centralement au châssis (2) respectivement deux côtés frontaux avant et alternativement arrière adjacents de deux corps de dilatation (12, 13, 14, 15) adjacents.

4. Aménagement selon l'une quelconque des revendications précédentes, **caractérisé en ce que** les corps de dilatation (12, 13, 14, 15) forment avec le châssis qui les entoure une unité structurelle et **en ce qu'**une pluralité de ces unités de dilatation (12, 13, 14, 15) est assemblée pour obtenir l'aménagement qui représente un espace fermé recevant les corps de dilatation.

5. Aménagement selon l'une quelconque des revendications précédentes, **caractérisé en ce que** le dispositif de chauffage est une chaudière d'une installation de chauffage, par exemple pour un bâtiment, qui alimente de manière classique des corps de chauffage d'un chauffage central d'eau chaude, et **en ce que** de l'eau chaude est acheminée de la chaudière par des conduites d'eau chaude à l'entrée inférieure d'une unité I et évacuée par la sortie supérieure de l'unité II et acheminée à la chaudière de sorte que les corps de dilatation de l'unité I soient chauffés et que, en même temps, de manière symétrique, en décalage de phase, de l'eau refroidie soit acheminée par l'unité II et renvoyée dans la chaudière.

6. Aménagement selon l'une quelconque des revendications précédentes, **caractérisé en ce que** les corps de dilatation se présentent sous la forme de corps chauffables ou de tubes creux et sont agencés dans un châssis rigide de sorte que les courses de dilatation, atteintes en raison du chauffage, des corps de dilatation soient transmises d'un corps au corps suivant et que les distances (X) de la dilatation des corps soient ajoutées et ce, de manière à obtenir la dilatation d'un facteur n à la fin de la cascade.

7. Aménagement selon l'une quelconque des revendications précédentes, **caractérisé en ce que**, pour optimiser l'exploitation et assurer le mélange et l'échange de chaleur de l'énergie thermique acheminée,
a) il est affecté à un groupe d'unités de dilatation un échangeur de chaleur (B) constitué d'une pluralité de chambres de traitement thermique, dont les récipients partiels (B1 à B19) sont chauffés à des valeurs de température différant l'une de l'autre par paliers, qui sont regroupés successivement et en continu avec les unités de dilatation pour la transmission et l'échange de chaleur,
b) il est prévu un dispositif de chauffage (A) supplémentaire, chauffé à une température constante définie de manière fixe et maintenu à cette température constante,
c) le dispositif de chauffage (A) est conformé de manière à pouvoir être raccordé aux unités de dilatation (P) pour la transmission de chaleur de sorte que la température des unités de dilatation (P) soit portée à la température du dispositif thermique de A et que, après avoir atteint cette température, il soit à nouveau renvoyé en position de départ, et
d) les récipients partiels (B1 à B19) de l'échangeur de chaleur (B) sont mis en contact en continu et successivement dans un ordre décroissant, puis croissant, jusqu'à ce qu'un équilibre de température soit atteint et que les récipients partiels soient renvoyés à nouveau dans leur position de départ dans le dispositif (B), et le récipient partiel (B2) suivant est préparé dans le dispositif (B) pour venir en contact et en échange de chaleur avec l'unité de dilatation (P) respective, etc., jusqu'à ce que le dernier récipient partiel (B19) ait procédé à l'échange de chaleur et, ensuite, le processus se déroule en partant des récipients partiels (B18 à B1) dans le sens contraire pour effectuer l'échange de chaleur, puis le déroulement des étapes a) à d) est répété en continu.

8. Aménagement selon la revendication 7, **caractérisé en ce que** le dispositif de chauffage (A), l'échangeur de chaleur (B) et les récipients partiels (B1 à B19) sont aménagés respectivement dans une gaine thermoisolante qui, à des fins de retrait et de réception de la source d'énergie, s'ouvre ou se ferme brièvement et automatiquement en fonction de la cadence de la connexion respective.

9. Aménagement selon l'une quelconque des revendications 7 ou 8, **caractérisé en ce que** l'échangeur de chaleur (B) présente un boîtier thermoisolant réglable en hauteur, qui est entraîné par un dispositif de levage sous la forme d'un treuil à câble ou d'un entraînement par chaîne de manière à pouvoir être déplacé progressivement vers le haut ou vers le bas, à la cadence de la rentrée et de la sortie successives des récipients partiels respectifs (B1 à B19) , et **en ce que** le dispositif de chauffage (A) est conformé de manière à pouvoir se connecter au choix aux unités de dilatation (P) ou, inversement, l'échangeur de chaleur (B) au dispositif de chauffage (A).

10. Aménagement selon l'une quelconque des revendications 1 à 9, **caractérisé en ce que** les corps de dilatation sont raccordés l'un à l'autre par un dispositif flexible (89) absorbant la dilatation, en particulier par une membrane flexible.

11. Aménagement selon l'une quelconque des revendications 1 à 10, **caractérisé en ce que** les unités de dilatation (100, 101, 102, 103) sont entourées par un récipient respectif (104), qui est isolé à l'intérieur et à l'extérieur et qui forme, entre son isolation interne (105) et l'unité de dilatation respective (100), un canal de guidage d'air (106) s'écoulant autour de l'unité de dilatation (100).

12. Aménagement selon la revendication 11, **caractérisé en ce que** les récipients (104) sont logés dans un boîtier global (108) et, dans chaque récipient (104), la source d'énergie (109) s'écoule autour de l'unité de dilatation respective (100).

13. Procédé de stockage et de récupération d'énergie thermique acheminée à un échangeur de chaleur (B) , dans lequel l'échangeur de chaleur (B) présente au moins une unité de dilatation (P) et un premier à un N-ème récipient partiel (B1 à B19), **caractérisé en ce que** :
(a) la au moins une unité de dilatation (P) est chauffée à une température de départ (T_{A}) prédéfinie,
(b) les premier à N-ème récipients partiels (B1 à B19) sont chauffés à une première à N-ème température de stockage respective prédéterminée, la première à N-ème température de stockage diminuant par palier du premier au N-ème récipient partiel (B1 à B19),
(c) les premier à N-ème récipients partiels (B1 à B19) sont amenés en relation d'échange de chaleur en partant du premier récipient partiel (B1), successivement, avec la au moins une unité de dilatation (P) et sont à nouveau séparés respectivement après avoir atteint une première à N-ème température d'équilibre résultante du premier au N-ème accumulateur de chaleur partiel (B1 à B 1 9) respectif, réduisant de la sorte la température de départ (T_{A}) prédéfinie de la au moins une unité de dilatation (P) par palier à une température correspondant à la N-ème température d'équilibre,
(d) la température correspondant à la N-ème température d'équilibre de la au moins une unité de dilatation (P) est refroidie à une température finale prédéfinie,
(e) le N-ème récipient partiel (B19) présentant la N-ème température d'équilibre est refroidi à la N-ème valeur de température de stockage prédéterminée,
(f) dans l'ordre inverse, en partant du N-1-ème récipient partiel (B18), les premier à N-1-ème récipients partiels (B1 à B18) sont mis en relation d'échange de chaleur successivement avec la au moins une unité de dilatation (P) présentant la température finale et sont à nouveau séparés respectivement après avoir atteint une première à N-1-ème autre température d'équilibre résultante du premier au N-1-ème récipient partiel (B1 à B 18) respectif, augmentant de la sorte la température finale de la au moins une unité de dilatation (P) par palier à une température correspondant à la première température d'équilibre,
(g) la au moins une unité de dilatation (P) est chauffée de la première température d'équilibre à la température de départ (T_{A}) prédéfinie, et
(h) les étapes (c) à (g) précédentes sont répétées en continu.

14. Procédé de stockage et de récupération d'énergie thermique acheminée à un échangeur de chaleur (B), dans lequel l'échangeur de chaleur (B) présente au moins une unité de dilatation (P) et des premier à N-ème récipients partiels (B1 à B19),
**caractérisé en ce que**
(a) la au moins une unité de dilatation (P) est chauffée à une température de départ (T_{A}) prédéfinie,
(b) les premier à N-ème récipients partiels (B1 à B19) sont chauffés à une première à N-ème température de stockage respective prédéterminée, la première à N-ème température de stockage diminuant par palier du premier au N-ème récipient partiel (B1 à B19),
(c) les premier à N-ème récipients partiels (B1 à B19) sont amenés en relation d'échange de chaleur en partant du premier récipient partiel (B1), successivement, avec la aumoins une unité de dilatation (P) et sont à nouveau séparés respectivement après avoir atteint une première à N-ème température d'équilibre résultante du premier au N-ème récipient partiel (B1 à B19) respectif, augmentant de la sorte la température de départ de la au moins une unité de dilatation (P) par palier à une température correspondant à la N-ème température d'équilibre,
(d) la température correspondant à la N-ème température d'équilibre de la au moins une unité de dilatation (P) est chauffée à une température finale prédéfinie,
(e) le N-ème récipient partiel (B19) présentant la N-ème température d'équilibre est chauffé à la N-ème valeur de température de stockage prédéterminée,
(f) dans l'ordre inverse, en partant du N-1-ème récipient partiel (B18), les premier à N-1-ème récipients partiels (B1 à B18) sont mis en relation d'échange de chaleur successivement avec la au moins une unité de dilatation (P) présentant la température finale et sont à nouveau séparés respectivement après avoir atteint une première à N-1-ème autre température d'équilibre résultante du premier au N-1-ème récipient partiel (B1 à B18) respectif, réduisant de la sorte la température finale de la au moins une unité de dilatation (P) par palier à une température correspondant à la première température d'équilibre,
(g) la au moins une unité de dilatation (P) est refroidie de la première température d'équilibre à la température de départ (T_{A}) prédéfinie, et
(h) les étapes (c) à (g) précédentes sont répétées en continu.

15. Procédé selon la revendication 13 ou 14, **caractérisé en ce que** de l'énergie thermique est évacuée pour refroidir l'unité de dilatation (P) présentant la N-ème température d'équilibre à une température finale prédéfinie et/ou pour refroidir le N-ème récipient partiel (B19) présentant la N-ème température d'équilibre à la N-ème température de stockage prédéterminée.

16. Procédé selon l'une quelconque des revendications 13 à 15, **caractérisé en ce que**, par le processus d'échange de chaleur, la même énergie thermique est d'abord acheminée respectivement à chaque premier à N-ème récipient partiel (B1 à B19) et, ensuite, la même énergie thermique est à nouveau extraite respectivement de chaque premier à N-ème récipient partiel (B1 à B19).

17. Procédé selon l'une quelconque des revendications 13 à 16, **caractérisé en ce que** de l'énergie mécanique est produite par le refroidissement et/ou le chauffage par palier à travers la aumoins une unité de dilatation (P).

18. Procédé selon la revendication 17, **caractérisé en ce que** l'énergie mécanique est produite via au moins un corps de dilatation (12, 13, 14, 15) prévu dans l'unité de dilatation (P), qui se dilate ou se contracte progressivement en raison du refroidissement et du chauffage par palier de l'unité de dilatation (P).

19. Procédé selon l'une quelconque des revendications 13 à 18, **caractérisé en ce que** les premier à N-ème récipients partiels (B1 à B19) se présentent respectivement sous la forme de récipients isolés complètement vers l'extérieur, qui présentent respectivement une section interne et une section externe, remplies respectivement d'une source d'énergie, en particulier d'un liquide ou d'un gaz.
